(19) Europäisches Patentamt
European Patent Office
Office européen des brevets

(11) EP 3 257 893 B1

(12) **EUROPÄISCHE PATENTSCHRIFT**

(45) Veröffentlichungstag und Bekanntmachung des Hinweises auf die Patenterteilung:
**26.12.2018 Patentblatt 2018/52**

(51) Int Cl.:
***C08K 5/5313*** (2006.01) ***C08K 5/5317*** (2006.01)
***C08K 13/02*** (2006.01) ***C08L 77/00*** (2006.01)

(21) Anmeldenummer: **17170995.9**

(22) Anmeldetag: **15.05.2017**

(54) **FASER-MATRIX-HALBZEUG**

FIBRE-MATRIX SEMI-FINISHED PRODUCT

DEMI-PRODUIT MATRICE/FIBRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.06.2016 EP 16174524**
**01.09.2016 EP 16186750**

(43) Veröffentlichungstag der Anmeldung:
**20.12.2017 Patentblatt 2017/51**

(73) Patentinhaber: **LANXESS Deutschland GmbH**
**50569 Köln (DE)**

(72) Erfinder:
- **ENDTNER, Jochen**
  **50679 Köln (DE)**
- **BIENMÜLLER, Matthias**
  **47803 Krefeld (DE)**
- **SEIDEL, Stefan**
  **33102 Paderborn (DE)**

(56) Entgegenhaltungen:
**WO-A1-2014/135256**

EP 3 257 893 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft einschichtige, flammgeschützte, Polyamid basierte Faser-Matrix-Halbzeuge, ein Verfahren zu deren Herstellung und deren Verwendung.

## Stand der Technik

Faser-Matrix-Halbzeuge im Sinne der vorliegenden Erfindung sind Composites aus Faserhalbzeugen, worin Fasermaterialien in Form von Fasern, Faserbündel oder Filamenten, bereitgestellt als Faserhalbzeuglagen, von einer schützenden und lagebestimmenden Thermoplastmatrix umhüllt sind. Verschiedentlich werden für derartige Faser-Matrix-Halbzeuge auch die Begriffe Faserverbundwerkstoff, Composite oder Organoblech verwendet.

Faser-Matrix-Halbzeuge werden bereits heute in hohen Stückzahlen beispielsweise bei der Bond-Laminates GmbH, Brilon, Deutschland in Form von Plattenware hergestellt und unter dem Namen Tepex® vertrieben. Diese Faser-Matrix-Halbzeuge in Form von Plattenware weisen bereits alle technischen Eigenschaften auf, die als Anforderungen an daraus zu fertigende Bauteile gestellt werden. Die Verarbeitung von Faser-Matrix-Halbzeugen in Form von Plattenware zum fertigen Bauteil, das schließlich beispielsweise in Kraftfahrzeugen zum Einsatz kommt, erfolgt in weiteren Prozessschritten, insbesondere durch Umformen, Trennen, Fügen, Veredeln etc.

Für die textile Verstärkung eines Faser-Matrix-Halbzeugs kommen textile Halbzeuge zum Einsatz, worin eine Vielzahl von Einzelfilamenten in geeigneter Weise im Verbund miteinander stehen. Insbesondere handelt es sich dabei um flächige, textile Halbzeuge, vorzugsweise Gewebe, auf Basis von Endlosfasern und gegebenenfalls zusätzlich noch Langfasern.

Die für ein textiles Halbzeug einzusetzenden Endlosfasern zeichnen sich durch hohe mechanische Leistungsfähigkeit bei geringem Gewicht aus. Vorzugsweise handelt es sich dabei um technische Fasern, insbesondere um Glas- oder Kohlenstofffasern, dem Fachmann auch bekannt als Carbonfasern.

Die hohe Anisotropie ist eine Eigenart der als textile Verstärkung in Faser-Matrix-Halbzeugen eingesetzten textilen Halbzeuge. Erst diese Anisotropie, d. h. die richtungsabhängigen Eigenschaften wie z. B. die hohe massebezogene Festigkeit und Torsionssteifigkeit textiler Halbzeuge, ermöglicht die Herstellung von Faser-Matrix-Halbzeugen mit hohem Leichtbaupotential, insbesondere beim Einsatz in strukturellen und semistrukturellen Anwendungen.

Gemäß WO 2010 / 132 335 A1führen jedoch die Verfahren des Standes der Technik zu Faser-Matrix-Halbzeugen, die bei genauer Betrachtung einen geschichteten Aufbau erkennen lassen. Dabei unterscheidet sich die Matrixharzzusammensetzung, die das textile Halbzeug einkapselt und einbettet um mit dieser ein interpenetrierendes Netzwerk zu bilden, von der Oberflächenharzzusammensetzung. Entweder ist Letztere frei von Fasermaterial oder sie enthält, wie in WO 2010 / 132 335 A1, ein unterschiedliches Polyamid.

Auch WO 2012 / 132 399 A1 unterscheidet innerhalb eines Faser-Matrix-Halbzeugs eine Oberflächenharzzusammensetzung von einer Matrixharzzusammensetzung.

WO 2014/135256 A1 offenbart eine flammhemmende Polyamidzusammensetzung, enthaltend als Komponente A 1 bis 96 Gew.-% eines oder mehrere thermoplastische Polyamide, als Komponente B 2 bis 25 Gew.-% eines Dialkylphosphinsäuresalzes der Formel (I) und/oder eines Diphosphinsäuresalzes der Formel (II) und/oder deren Polymere, worin Endlosfasern enthalten sind.

Schließlich beschreiben EP 1923420 A1 oder auch WO 2012 / 058 379 A1 im Beispielteil den geschichteten Aufbau von Composite Materialien aus Folien.

Gerade aber ein geschichteter Aufbau von Faser-Matrix-Halbzeugen, im weiteren Verlauf dieser Anmeldung auch als Composites oder Composite Materialien bezeichnet, kann bei deren Einsatz in mechanisch beanspruchten Erzeugnissen zu einer Delamination führen, was sich beispielsweise in der Abnahme der Biegefestigkeit im Biegeversuch gemäß ISO178 zeigt. Ferner besteht die Gefahr einer unzureichenden Anbindung oder reduzierten Anbindung des Matrixpolymers an das Fasermaterial, verursacht durch Additive im einzusetzenden Matrixharz, beispielsweise Flammschutzadditive.

Ausgehend von diesem Stand der Technik bestand die Aufgabe der vorliegenden Erfindung deshalb darin, flammgeschützte und nicht zur Delamination neigende Faser-Matrix-Halbzeuge bereit zu stellen, worin trotz Einsatz von Flammschutzadditiven die Anbindung des Matrixpolymers an das Fasermaterial erhalten bleibt, wobei als Kriterium für den Erhalt der Anbindung eine gleichwertige oder bessere Biegefestigkeit gilt, und unter "gleichwertig" eine Abweichung von maximal $\pm$ 3% vom Referenzwert einer nicht flammgeschützten Zusammensetzung verstanden wird.

## Erfindung

Lösung der Aufgabe und Gegenstand der vorliegenden Erfindung sind Faser-Matrix-Halbzeuge enthaltend 1 bis 100 Faserhalbzeuglagen aus Endlosfasern, bevorzugt 2 bis 40 Faserhalbzeuglagen aus Endlosfasern, besonders bevorzugt 2 bis 10 Faserhalbzeuglagen aus Endlosfasern, wobei die Faserhalbzeuglagen jeweils ein Flächengewicht

im Bereich von 5 $g/m^2$ bis 3000 $g/m^2$, bevorzugt im Bereich von 100 $g/m^2$ bis 900 $g/m^2$, besonders bevorzugt im Bereich von 150 $g/m^2$ bis 750 $g/m^2$, aufweisen,
und die Gesamtheit aller Faserhalbzeuglagen mit einem Compound enthaltend als Komponente A) wenigstens ein Polyamid mit einer nach DIN EN ISO 307 bei 25°C zu bestimmenden relativen Lösungsviskosität in m-Kresol im Bereich von 2,0 bis 4,0 als Matrixpolymer imprägniert ist,
und dieses Faser-Matrix-Halbzeug einen nach DIN 1310 definierten Volumenanteil an Fasermaterialien im Bereich von 25 bis 65%, und einen Volumenanteil an Luft oder Gas von weniger als 15% aufweist und worin
das Compound bezogen auf 100 Massenanteile der Komponente A) zusätzlich als Komponente B) 5 bis 100 Massenanteile, bevorzugt 10 bis 65 Massenanteile, besonders bevorzugt 20 bis 60 Massenanteile wenigstens eines organischen **Phosphinsäuresalzes** der Formel (I) und/oder eines **Diphosphinsäuresalzes** der Formel (II) und/oder deren Polymere enthält,

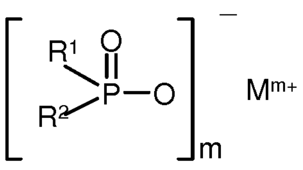 (I) 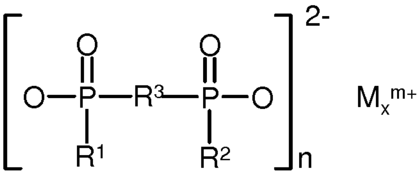 (II)

worin

$R^1$ und $R^2$ gleich oder verschieden sind und für ein lineares oder verzweigtes $C_1$-$C_6$-Alkyl, und/oder für $C_6$-$C_{10}$-Aryl stehen,

$R^3$ für lineares oder verzweigtes $C_1$-$C_{10}$-Alkylen, $C_6$-$C_{10}$-Arylen oder für $C_1$-$C_6$- Alkylarylen oder Aryl-$C_1$-$C_6$-alkylen steht,

M für Aluminium, Zink oder Titan und/oder eine protonierte Stickstoffbase steht,

m für eine ganze Zahl von 1 bis 4 steht;

n für eine ganze Zahl von 1 bis 3 steht,

x für 1 und 2 steht, und

n, x und m in Formel (II) gleichzeitig nur solche ganzen Zahlen annehmen können, dass das Diphosphinsäuresalz der Formel (II) als Ganzes ungeladen ist und die Faserhalbzeuglagen die Endlosfasern in Form eines Materials aus der Gruppe Gewebe, Gelege, Multiaxialgelege, Gesticke, Geflechte, Vliese, Filze, Matten und unidirektionale Faserstränge oder Gemische dieser Materialien enthalten.

Im Gegensatz zum Stand der Technik sind in den erfindungsgemäßen flammgeschützten Faser-Matrix-Halbzeugen die Faserhalbzeuglagen mit Matrixpolymer soweit einheitlich imprägniert und konsolidiert, dass eine Delamination der Schichten weitestgehend vermieden wird. Eine Unterscheidung zwischen Matrixharzzusammensetzung und Oberflächenharzzusammensetzung ist aufgrund des hohen Grades der Konsolidierung nicht mehr möglich und die Anbindung des Matrixpolymers an das Fasermaterial durch die Additivierung mit dem erfindungsgemäß einzusetzenden Flammschutzmittel ist nicht wesentlich reduziert.
Als Maß für die Delaminierung wird im Rahmen der vorliegenden Anmeldung die Biegefestigkeit gemäß ISO178 herangezogen. Dabei werden Probenkörper der Abmessung 80 mm · 10 mm · 1mm an den Enden auf zwei Aufleger gelegt und in der Mitte mit einem Biegestempel belastet (Bodo Carlowitz: Tabellarische Übersicht über die Prüfung von Kunststoffen, 6. Auflage, Giesel-Verlag für Publizität, 1992, S. 16-17). Ein hoher Wert für die Biegefestigkeit steht dann für eine besser Anbindung des Matrixpolymers an das Fasermaterial und damit für eine geringere Delaminierung.
Zur Klarstellung sei angemerkt, dass die Einschichtigkeit durch die Gesamtheit der Merkmale hinsichtlich der Faserhalbzeuglagen, deren Flächengewicht, des Polyamid-Compounds, dem Volumenanteil an Fasern sowie dem Volumenanteil an Luft oder Gas in Bezug auf das gesamte Faser-Matrix-Halbzeug, d. h. im Bereich der oberen Oberfläche und der unteren Oberfläche, definiert ist. Ein erfindungsgemäß einzusetzendes Faser-Matrix-Halbzeug zeichnet sich vorzugsweise dadurch aus, dass diese Merkmale durch den Imprägnierprozess und durch die Konsolidierung einheitlich in selbigem vorliegen. Mit **einheitlicher** Imprägnierung bzw. Konsolidierung wird insbesondere die Tatsache beschrieben, dass es innerhalb des erfindungsgemäßen Faser-Matrix-Halbzeugs, d. h. im Bereich zwischen beiden Oberflächen,

keine Bereiche oder Abschnitte gibt, die einen Volumenanteil an Luft oder Gas oder einen Volumenanteil an Fasermaterialien außerhalb der oben genannten bzw. beanspruchten Bereiche aufweisen, wobei insbesondere der Bereich zwischen Oberfläche bis in eine Tiefe von 50 μm von Relevanz ist.

Zur Klarstellung sei ferner angemerkt, dass alle aufgeführten, allgemeinen oder in Vorzugsbereichen genannten Definitionen und Parameter in beliebigen Kombinationen umfasst sind. Im Rahmen dieser Anmeldung zitierte Normen gelten in der zum Anmeldetag gültigen Fassung.

Erfindungsgemäß einzusetzende Polyamide können aus nur einem Monomer oder aus einer Mischung von wenigstens zwei Polamiden (Copolymere, Terpolymere etc.) aufgebaut sein. Erfindungsgemäß umfasst der Begriff Polyamid aber auch physikalische Mischungen wenigstens zweier verschiedener Polyamide.

Gegenstand der Erfindung ist aber auch ein Verfahren zur Herstellung eines einschichtigen Faser-Matrix-Halbzeugs umfassend

a) Bereitstellen von 1 bis 100 Faserhalbzeuglagen aus Endlosfasern, bevorzugt 2 bis 40 Faserhalbzeuglagen, besonders bevorzugt 2 bis 10 Faserhalbzeuglagen, wobei die Faserhalbzeuglagen,
wobei die Faserhalbzeuglagen jeweils ein Flächengewicht im Bereich von 5 $g/m^2$ bis 3000 $g/m^2$, bevorzugt im Bereich von 100 $g/m^2$ bis 900 $g/m^2$, besonders bevorzugt im Bereich von 150 $g/m^2$ bis 750 $g/m^2$, aufweisen,

b) Bereitstellen eines Compounds enthaltend wenigstens ein Polyamid als Komponente A) mit einer nach DIN EN ISO 307 bei 25°C zu bestimmenden relativen Lösungsviskosität in m-Kresol im Bereich von 2,0 bis 4,0, bevorzugt im Bereich von 2,2 bis 3,5 ganz besonders bevorzugt im Bereich von 2,4 bis 3,1,

c) Auftragen des Compounds auf die Gesamtheit aller Faserhalbzeuglagen,

d) Imprägnieren und Konsolidieren der Gesamtheit aller Faserhalbzeuglagen mit dem Compound zu einem Verbund mit einem nach DIN 1310 definierten Volumenanteil an Fasermaterialien im Bereich von 25 bis 65%, vorzugsweise im Bereich von 30 bis 55%, besonders bevorzugt im Bereich 40 bis 50%, und einem Volumenanteil an Luft oder Gas von weniger als 15%, vorzugsweise weniger als 10%, besonders bevorzugt weniger als 5%, durch Einwirken von Temperaturen ≥ der Schmelztemperatur des wenigstens einen Polyamids im Compound und zusätzlichem Druck auf die mit Compound beaufschlagte Gesamtheit aller Faserhalbzeuglagen,

e) Abkühlen bzw. Solidifikation unter Erhalt des Faser-Matrix-Halbzeugs,

wobei das Compound bezogen auf 100 Massenanteile der Komponente A) zusätzlich als Komponente B) 5 bis 100 Massenanteile, bevorzugt 10 bis 65 Massenanteile, besonders bevorzugt 20 bis 60 Massenanteile wenigstens eines organischen Phosphinsäuresalzes der Formel (I) und/oder eines Diphosphinsäuresalzes der Formel (II) und/oder deren Polymere enthält,

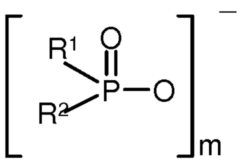 $M^{m+}$ (I) 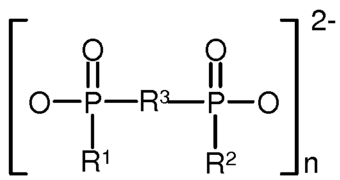 $M_x^{m+}$ (II)

worin

$R^1$ und $R^2$ gleich oder verschieden sind und für ein lineares oder verzweigtes $C_1$-$C_6$-Alkyl, und/oder für $C_6$-$C_{10}$-Aryl stehen,

$R^3$ für lineares oder verzweigtes $C_1$-$C_{10}$-Alkylen, $C_6$-$C_{10}$-Arylen oder für $C_1$-$C_6$- Alkylarylen oder Aryl-$C_1$-$C_6$-alkylen steht,

M für Aluminium, Zink oder Titan und/oder eine protonierte Stickstoffbase steht,

m für eine ganze Zahl von 1 bis 4 steht;

n für eine ganze Zahl von 1 bis 3 steht,

x für 1 und 2 steht, und

n, x und m in Formel (II) gleichzeitig nur solche ganzen Zahlen annehmen können, dass das Diphosphinsäuresalz der Formel (II) als Ganzes ungeladen ist und die Faserhalbzeuglagen die Endlosfasern in Form eines Materials aus der Gruppe Gewebe, Gelege, Multiaxialgelege, Gesticke, Geflechte, Vliese, Filze, Matten und unidirektionale Faserstränge oder Gemische dieser Materialien enthalten.

Indem man auf das Fasermaterial die Komponente B) - und in einer alternativen Ausführungsform gegebenenfalls die Komponenten C) und/oder Komponente D) und/oder Komponente E) und/oder Komponente F) - enthaltendes Polyamid-Compound bei Temperaturen gleich oder oberhalb des Schmelzpunkts des Polyamids bzw. Compounds sowie Druck einwirken lässt, erfolgt eine Plastifizierung des Polyamids bzw. Compounds und damit die Imprägnierung des Fasermaterials, die im Rahmen der sich anschließenden oder aber gleichzeitig stattfindenden Konsolidierung trotz der Anwesenheit von Flammschutzmittel im Compound eine hervorragende Faseranbindung des Matrixpolymers gewährleistet.

Gegenstand der vorliegenden Erfindung sind aber auch Erzeugnisse enthaltend wenigstens ein flammgeschütztes, einschichtiges Faser-Matrix-Halbzeug, wobei die Einschichtigkeit durch die Gesamtheit der oben definierten Merkmale hinsichtlich der Faserhalbzeuglagen, dem Flächengewicht, der Viskosität des einzusetzenden Polyamids, dem Volumenanteil an Fasern sowie dem Volumenanteil an Luft definiert wird.

Gegenstand der Erfindung sind aber auch Erzeugnisse worin das einschichtige Faser-Matrix-Halbzeug mit Spritzgussmassen überspritzt, hinterspritzt, oder umspritzt ist oder Funktionselemente angespritzt sind. Letztere können aus den erfindungsgemäßen einschichtigen Faser-Matrix-Halbzeugen herstellt werden, indem entweder während der Konsolidierung oder in einem zusätzlichen Verfahrensschritt, vorzugsweise während eines Umformschritts, Verstärkungen, vorzugsweise rippenförmige Verstärkungsstrukturen, oder Funktionselemente durch Spritzguss oder mittels Fließpressen an das Faser-Matrix-Halbzeug angefügt werden.

## Bevorzugte Ausführungsformen der Erfindung

Vorzugsweise weist das Compound einen MVR (Schmelze-Volumen-Fließrate) nach ISO 1133 im Bereich von 1 $cm^3$/10 min bis 100 $cm^3$/10 min, besonders bevorzugt im Bereich von 50 $cm^3$/10 min bis 100 $cm^3$/10 min, auf. Der MVR nach ISO 1133 wird mittels eines Kapillarrheometers ermittelt, wobei das Material (Granulat oder Pulver) in einem beheizbaren Zylinder aufgeschmolzen und unter einem durch die Auflagelast entstehenden Druck durch eine definierte Düse (Kapillare) gedrückt wird. Ermittelt wird das austretende Volumen bzw. Masse der Polymerschmelze (des sogenannten Extrudats) als Funktion der Zeit. Ein wesentlicher Vorteil der Schmelze-Volumenfließrate liegt in der einfachen Messung des Kolbenwegs bei bekanntem Kolbendurchmesser zur Bestimmung des ausgetretenen Schmelzevolumens. Die Einheit für den MVR ist $cm^3$/10min.

## Komponente C)

In einer bevorzugten Ausführungsform enthält das Compound zusätzlich zu den Komponenten A) und B) noch Komponente C) wenigstens ein **Salz aus Melamin und kondensierten Phosphorsäuren**, vorzugsweise in Mengen im Bereich von 1 bis 40 Massenanteilen, besonders bevorzugt in Mengen im Bereich von 4 bis 30 Massenanteilen, ganz besonders bevorzugt in Mengen von 6 bis 18 Massenanteilen, jeweils bezogen auf 100 Massenanteile der Komponente A).

Bevorzugt sind Melaminpolyphosphat oder Melamin-interkalierte Aluminium-, Zink- oder Magnesium-Salze von kondensierten Phosphaten. Letztere sind z. B. nach WO2012/025362 A1 zugänglich, wobei Bis-Melamin-zinko-diphosphat (EP 2 609 173 A1), Bis-Melamin-alumotriphosphat (EP 2 609 173 A1) oder Melaminpolyphosphat besonders bevorzugt sind. Ganz besonders bevorzugt wird Melaminpolyphosphat [CAS Nr. 218768-84-4] eingesetzt. Melaminpolyphosphat ist in diversen Produktqualitäten kommerziell verfügbar. Beispiele hierfür sind u.a. Melapur® 200/70 der Fa. BASF, Ludwigshafen, Deutschland sowie Budit® 3141 der Fa. Budenheim, Budenheim, Deutschland.

Bevorzugt wird Komponente C) so eingesetzt, dass das Gewichtsverhältnis der Komponente B) zur Komponente C) im Bereich von 95:5 bis 60:40 liegt, wobei ein Gewichtsverhältnis im Bereich von 90:10 bis 70:30 bevorzugt und ein Gewichtsverhältnis im Bereich von 85:15 bis 75:25 - jeweils bezogen auf 100 Gewichtsanteile einer Summe aus Komponente B) und Komponente C) - besonders bevorzugt ist.

## Komponente D)

Das Compound enthält zusätzlich zu den Komponenten A) bis C) oder anstelle von C) noch Komponente D) Zinkborat, vorzugsweise in Mengen im Bereich von 0,1 bis 20 Massenanteilen, besonders bevorzugt im Bereich von

0,4 bis 10 Massenanteilen, ganz besonders bevorzugt im Bereich von 1 bis 4 Massenanteilen, jeweils bezogen auf 100 Massenanteile der Komponente A).

Unter dem Begriff Zinkborat im Rahmen der vorliegenden Erfindung sollen Substanzen verstanden werden, die aus Zinkoxid und Borsäure zugänglich sind. Als Komponente D) einzusetzendes Zinkborat umfasst sowohl hydratfreie Zinkborate, insbesondere $ZnO{\cdot}B_2O_3$ als auch verschiedene Hydrate der Zinkborate, insbesondere $ZnO{\cdot}B_2O_3{\cdot}2H_2O$ und $2ZnO{\cdot}3B_2O_3{\cdot}3{,}5H_2O$, wobei hydratfreie Zinkboratqualitäten bevorzugt sind. Beispiele für einsetzbare Zinkborate sind in Gmelin Syst.-Nr.32, Zn, 1924, S. 248**,** Erg.-Bd., 1956, S. 971-972**,** Kirk-Othmer (4.) 4, 407-408, 10, 942**;** Ullmann (5.) A4, 276**;** Winnacker-Küchler (4.) 2, 556 beschrieben. Kommerziell verfügbare Zinkboratqualitäten sind u.a. Firebrake 500 und Firebrake ZB der Fa. Deutsche Borax GmbH (Sulzbach, Deutschland).

**Komponente E**)

In einer weiteren bevorzugten Ausführungsform enthält das Compound zusätzlich zu den Komponenten A) bis D) oder anstelle von C) noch E) Talk, vorzugsweise in Mengen im Bereich von 0,01 bis 50 Massenanteilen, besonders bevorzugt im Bereich von 0,5 bis 20 Massenanteilen, ganz besonders bevorzugt im Bereich von 1 bis 10 Massenanteilen, jeweils bezogen auf 100 Massenanteile der Komponente A), wobei mikrokristalliner Talk insbesondere bevorzugt ist.

Talkum [CAS Nr. 14807-96-6], auch als Talk bezeichnet, ist ein Schichtsilikat mit der chemischen Zusammensetzung $Mg_3[Si_4O_{10}(OH)_2]$, das je nach Modifikation als Talk-1A im triklinen oder als Talk-2M im monoklinen Kristallsystem kristallisiert (http://de.wikipedia.org/wiki/Talkum). Erfindungsgemäß einzusetzendes Talkum kann beispielsweise als Mistron® R10 von Imerys Talc Group, Toulouse, Frankreich (Rio Tinto Group) bezogen werden.

Mikrokristalliner Talk im Sinne der vorliegenden Erfindung wird in WO 2014/001158 A1 beschrieben, deren Inhalt von der vorliegenden Offenbarung vollumfänglich umfasst wird. In einer Ausführungsform der vorliegenden Erfindung wird mikrokristalliner Talk mit einer mittleren Teilchengröße d50 bestimmt nach SediGraph im Bereich von 0,5 bis 10 μm eingesetzt, bevorzugt im Bereich von 1,0 bis 7,5 μm, besonders bevorzugt im Bereich von 1,5 bis 5,0 μm und ganz besonders bevorzugt im Bereich von 1,8 bis 4,5 μm.

Wie in WO 2014/001158 A1 beschrieben, erfolgt im Rahmen der vorliegenden Erfindung die Teilchengrößenbestimmung des erfindungsgemäß einzusetzenden Talks durch Sedimentation in einem vollständig dispergierten Zustand in einem wässrigen Medium mit Hilfe eines "Sedigraph 5100" wie er von Micrometrics Instruments Corporation, Norcross, Georgia, USA, geliefert wird. Der Sedigraph 5100 liefert Messungen und einen Plot vom kumulativen Gewichtsprozentsatz von Teilchen mit einer Größe, die in der Technik als "Äquivalenter Kugeldurchmesser" (esd) bezeichnet wird, abzüglich der gegebenen esd-Werte. Die mittlere Teilchengröße d50 ist der aus der Teilchen-esd ermittelte Wert, zu dem 50 Gew.-% der Teilchen einen äquivalenten Kugeldurchmesser kleiner als diesen d50 Wert aufweisen. Die zugrunde liegende Norm ist ISO 13317-3.

In einer Ausführungsform ist mikrokristalliner Talk über die BET Oberfläche definiert. Erfindungsgemäß einzusetzender mikrokristalliner Talk weist bevorzugt eine BET Oberfläche, zu bestimmen in Analogie zu DIN ISO 9277, im Bereich von 5 bis 25 $m^2{\bullet}g^{-1}$ auf, besonders bevorzugt im Bereich von 10 bis 18 $m^2{\bullet}g^{-1}$, ganz besonders bevorzugt im Bereich von 12 bis 15 $m^2{\bullet}g^{-1}$.

**Komponente F)**

In einer weiteren bevorzugten Ausführungsform enthält das Compound zusätzlich zu den Komponenten A) bis E) oder anstelle von C) und/oder E) noch F) wenigstens ein weiteres zu den Komponenten B), C), D), E) unterschiedliches **Additiv,** vorzugsweise in Mengen im Bereich von 0,01 bis 100 Massenanteilen, besonders bevorzugt im Bereich von 0,1 bis 50 Massenanteilen, ganz besonders bevorzugt im Bereich von 0,3 bis 25 Massenanteilen, jeweils bezogen auf 100 Massenanteile der Komponente A). Bevorzugte weitere Additive im Sinne der vorliegenden Erfindung sind UV-Stabilisatoren, Thermostabilisatoren, Farbstoffe und Pigmente, weitere Flammschutzmittel, wobei halogenfreie Flammschutzmittel bevorzugt sind, Gleit- und Entformungsmittel, Füll- und Verstärkungsstoffe verschieden von Talk, Laserabsorber, di- oder mehrfunktionelle verzweigend oder kettenverlängernd wirkende Additive, Gammastrahlenstabilisatoren, Hydrolysestabilisatoren, Säurefänger, Antistatika, Emulgatoren, Nukleierungsmittel, Weichmacher, Verarbeitungshilfsmittel, Fließhilfsmittel und Elastomermodifikatoren. Die als Komponente F) einzusetzenden Additive können jeweils alleine oder in Mischung bzw. in Form von Masterbatchen eingesetzt werden.

Die technische Überlegenheit einschichtiger Faser-Matrix-Halbzeuge wird im Rahmen der vorliegenden Erfindung anhand des Rippenabzugtests mittels Kopfzugprobe belegt, wie sie dem Fachmann aus W. Siebenpfeiffer, Leichtbau-Technologien im Automobilbau, Springer-Wieweg, 2014, Seiten 118 - 120, bekannt ist und wie im Beispielteil beschrieben.

## Begriffsbestimmungen

Der Fachmann versteht unter Compoundierung (aus dem Englischen: *Compound* = "Mischung") einen Begriff aus der Kunststofftechnik, welcher mit Kunststoffaufbereitung gleichzusetzen ist und den Veredelungsprozess von Kunststoffen durch Beimischung von Zuschlagstoffen (Füllstoffe, Additive usw.) zur gezielten Optimierung der Eigenschaftsprofile, im vorliegenden Fall den Flammschutz, beschreibt. Die Compoundierung von Einsatzstoffen zu einem Compound erfolgt vorzugsweise in Extrudern, besonders bevorzugt in gleichläufigen Doppelschneckenextrudern, gegenläufigen Doppelschneckenextrudern, Planetwalzenextrudern oder Co-Knetern und umfasst die Verfahrensoperationen Fördern, Aufschmelzen, Dispergieren, Mischen, Entgasen und Druckaufbau. (siehe: https://de.wikipedia.org/wiki/Compoundierung).

Die in der vorliegenden Beschreibung verwendeten Begriffe "über", "bei" oder "etwa" sollen bedeuten, dass der danach genannte Betrag oder Wert der konkrete Wert oder ein etwa gleicher Wert sein kann. Der Ausdruck soll vermitteln, dass ähnliche Werte zu erfindungsgemäß gleichwertigen Ergebnissen oder Effekten führen und von der Erfindung mit umfasst werden.

Eine "Faser" im Sinne der vorliegenden Erfindung ist ein makroskopisch homogener Körper mit hohem Verhältnis von Länge zu seiner Querschnittsfläche. Der Faserquerschnitt kann eine beliebige Form sein, ist aber in der Regel rund oder oval.

Gemäß "http://de.wikipedia.org/wiki/Faser-Kunststoff-Verbund" unterscheidet man

- geschnittene Fasern, auch als Kurzfasern bezeichnet, mit einer Länge im Bereich von 0,1 bis 1 mm,
- Langfasern mit einer Länge im Bereich von 1 bis 50 mm und
- Endlosfasern mit einer Länge L > 50 mm.

Faserlängen können beispielsweise durch Microfokus-Röntgen-Computertomographie ($\mu$-CT) bestimmt werden; **DGZfP-Jahrestagung 2007 - Vortrag 47**. Die erfindungsgemäß einzusetzenden und Endlosfasern enthaltenden Faserhalbzeuge enthalten in einer Ausführungsform zusätzlich Langfasern.

In den erfindungsgemäß einzusetzenden Faserhalbzeuglagen sind die Endlosfasern in der Weise angeordnet, dass zumindest eine Faser oder ein Faserstrang mindestens eine andere Faser oder einen anderen Faserstrang berührt.

Der Begriff "Flächengewicht" bezeichnet die Masse einer erfindungsgemäß einzusetzenden Faserhalbzeuglage in Abhängigkeit von der Fläche und bezieht sich im Rahmen der vorliegenden Erfindung auf die trockene Faserschicht. Das Flächengewicht wird nach DIN EN ISO 12127 bestimmt.

Sofern nicht anders angegeben, erfolgt die Ermittlung mechanischer Kennwerte im Rahmen der vorliegenden Erfindung nach DIN EN ISO14125. Alle im Rahmen der vorliegenden Offenbarung genannten Normen beziehen sich auf die zum Anmeldetag gültige Fassung.

"Imprägniert" bedeutet im Sinne der vorliegenden Erfindung, dass der wenigstens eine Thermoplast in die Vertiefungen und Hohlräume des Fasermaterials bzw. Faserhalbzeugs eindringt und das Fasermaterial benetzt. "Konsolidiert" im Sinne der vorliegenden Erfindung bedeutet, dass im Faser-Matrix-Halbzeug ein Volumenanteil an Luft von weniger als 15%, vorzugsweise weniger als 10%, besonders bevorzugt weniger als 5% vorliegt. Imprägnierung (Benetzung des Fasermaterials durch den wenigstens einen Thermoplast) und Konsolidierung (Minimieren des Anteils eingeschlossener Gase) können gleichzeitig und / oder nacheinander erfolgen und / oder durchgeführt werden.

## Bevorzugte Flammschutzmittel der Komponente B)

Bevorzugt steht M in den Formeln (I) oder (II) für Aluminium. Unter protonierten Stickstoffbasen werden bevorzugt die protonierten Basen von 1,3,5-Triazinverbindungen, besonders bevorzugt Melamin verstanden. Bevorzugt sind $R^1$, $R^2$ in den Formeln (I) und (II) gleich oder verschieden und bedeuten $C_1$-$C_6$-Alkyl, linear oder verzweigt und/oder Phenyl. Besonders bevorzugt sind $R^1$, $R^2$ gleich oder verschieden und bedeuten Methyl, Ethyl, n-Propyl, iso-Propyl, n-Butyl, tert.-Butyl, n-Pentyl und/oder Phenyl.

Bevorzugt bedeutet $R^3$ in Formel (II) Methylen, Ethylen, n-Propylen, iso-Propylen, n-Butylen, tert.-Butylen, n-Pentylen, n-Octylen, n-Dodecylen, Phenylen, Naphthylen, Methylphenylen, Ethylphenylen, tert.-Butylphenylen, Methylnaphthylen, Ethylnaphthylen, tert.-Butylnaphthylen, Phenylmethylen, Phenylethylen, Phenylpropylen oder Phenylbutylen. Besonders bevorzugt bedeutet $R^3$ Phenylen oder Naphthylen. Geeignete Phosphinate sind in der WO-A 97/39053 beschrieben, deren Inhalt in Bezug auf die Phosphinate von der vorliegenden Anmeldung mit umfasst wird. Besonders bevorzugte Phosphinate im Sinne der vorliegenden Erfindung sind Aluminium- und Zinksalze des Dimethylphosphinats, des Ethylmethylphosphinats, des Diethylphosphinats und des Methyl-n-propylphosphinats sowie deren Mischungen.

Bevorzugt steht m in Formel (I) für 2 und 3, besonders bevorzugt für 3.

Bevorzugt steht n in Formel (II) für 1 und 3, besonders bevorzugt für 3.

Bevorzugt steht x in Formel (II) für 1 und 2, besonders bevorzugt für 2.

Ganz besonders bevorzugt wird als Flammschutzmittel Aluminium-tris(diethylphosphinat) [CAS Nr. 225789-38-8] eingesetzt, das z. B. von der Fa. Clariant International Ltd. Muttenz, Schweiz unter dem Handelsnamen Exolit® OP1230 oder Exolit® OP1240 angeboten wird.

**Verfahrensschritt a)**

Das im Verfahrensschritt a) bereitzustellende **Faserhalbzeug** enthält Endlosfasern. In einer Ausführungsform können zusätzlich Langfasern enthalten sein. Vorzugsweise enthält das erfindungsgemäß einzusetzende Faserhalbzeug keine zerkleinerten Fasern oder Teilchen, insbesondere keine Kurzfasern, letztere mit einer Länge im Bereich von 0,1 bis 1 mm.

Die in Verfahrensschritt a) einzusetzenden Faserhalbzeuglagen enthalten die erfindungsgemäß einzusetzenden Endlosfasern in Form von Gewebe, Gelege, Multiaxialgelege, Gesticke, Geflechte, Vliese, Filze, Matten und unidirektionale Faserstränge oder Gemische dieser Materialien. Besonders bevorzugt sind Gewebe. Ganz besonders bevorzugt sind Gewebe, die man aus Rovings herstellt. Mit diesen lassen sich in den daraus herzustellenden Erzeugnissen die höchsten mechanischen Kennwerte, insbesondere in Bezug auf Festigkeit, erzielen.

Vorzugsweise werden Endlosfasern aus Glasfasern und/oder Kohlenstofffasern eingesetzt, besonders bevorzugt aus Glasfasern. Aber auch andere Fasern, insbesondere aus Metall, Kunstfasern, Mineralfasern, Naturfasern, können eingesetzt werden, entweder im Gemisch mit Glasfasern und/oder Kohlenstofffasern oder als separate Materialien auszuwählen aus der Gruppe Gewebe, Gelege, Multiaxialgelege, Gesticke, Geflechte, Vliese, Filze, Matten und unidirektionale Faserstränge.

Vorzugsweise ist das erfindungsgemäß einzusetzende Gewebe ein Kohlenstofffasergewebe mit einem Flächengewicht von größer als oder gleich 150 g / $m^2$.

Zur Herstellung von Kohlenstofffasergewebe werden Kohlenfaserrovings eingesetzt. Zu deren Charakterisierung verwendet man die Fadenzahl in einem Faserbündel oder Kabel. Bevorzugt liegt die Fadenzahl im Bereich von 1.000 (1k) bis 50.000 (50k) Filamente pro Faserbündel. Besonders bevorzugte Größen sind 1.000 (1k) Filamente pro Faserbündel, 3.000 (3k) Filamente pro Faserbündel, 12.000 (12k) Filamente pro Faserbündel, 24.000 (24k) Filamente pro Faserbündel, 48.000 (48k) Filamente pro Faserbündel oder 50000 (50k) Filamente pro Faserbündel. Die Fadenzahl wird nach DIN EN 1049-2 bzw. ISO 7211-2 bestimmt.

Vorzugsweise ist das erfindungsgemäß einzusetzende Gewebe ein Glasfasergewebe mit einem Flächengewicht größer oder gleich 200 g / $m^2$, besonders bevorzugt größer als oder gleich 300 g / $m^2$.

Erfindungsgemäß zur Herstellung von Glasfasergeweben einzusetzende Glasrovings werden in der Regel über ihre Filamentzahl charakterisiert. Gemäß ISO 1144 und DIN 60905, Teil 1: "Tex-System; Grundlagen" ist das Tex-System international und national eingeführt worden. Das tex ist Einheit und Grundgröße des Tex-Systems. Ein tex entspricht einem Gewicht von einem Gramm pro 1000 m Rovinglänge. Erfindungsgemäß bevorzugte Größen für erfindungsgemäß einzusetzende Glasrovings liegen im Bereich von 300 tex bis 2400 tex, besonders bevorzugt im Bereich von 600 tex bis 1200 tex. Ganz besonders bevorzugt sind Glasrovings mit 300 tex, 600 tex, 1100 tex, 1200 tex und 2400 tex, insbesondere 600 tex und 1200 tex.

In einer Ausführungsform der vorliegenden Erfindung sind die Fasern der Faserhalbzeuglagen oberflächenmodifiziert, besonders bevorzugt mit einem Haftvermittler bzw. Haftvermittlersystem.

Auch die erfindungsgemäß einzusetzenden Carbonfasern können ohne oder mit Haftvermittler eingesetzt werden. Bevorzugte Haftvermittler basieren hierbei auf Urethan-, Epoxy- oder Acrylat-systemen.

Im Falle der erfindungsgemäß ganz besonders bevorzugten Glasfasern werden bevorzugt Haftvermittler bzw. Haftvermittlersysteme auf Silanbasis verwendet. Erfindungsgemäß einzusetzende Haftvermittler auf Silanbasis werden in EP 2468810 A1 beschrieben, deren Inhalt hiermit vollumfänglich umfasst wird.

Insbesondere bei Verwendung von Glasfasern werden zusätzlich zu Silanen als Haftvermittler bevorzugt auch Polymerdispersionen, Emulgatoren, Filmbildner (insbesondere Polyepoxid-, Polyether-, Polyolefin-, Polyvinylacetat-, Polyacrylat- oder Polyurethanharze oder Mischungen davon), Verzweiger, weitere Haftvermittler, Gleitmittel, pH-Puffersubstanzen und/oder Glasfaserverarbeitungshilfsmittel (beispielsweise Netzmittel und/oder Antistatika) verwendet. Die weiteren Haftvermittler, Gleitmittel und sonstigen Hilfsstoffe, Verfahren zur Herstellung der Schlichten, Verfahren zur Beschlichtung und Nachbearbeitung der Glasfasern sind dem Fachmann bekannt und beispielsweise in K.L. Löwenstein, "The Manufacturing Technology of Continuous Glass Fibres", Elsevier Scientific Publishing Corp., Amsterdam. London, New York, 1983, beschrieben. Die Glasfasern können über beliebige Methoden beschlichtet werden, bevorzugt mit Hilfe geeigneter Vorrichtungen, insbesondere mit Sprüh- oder Walzenapplikatoren. Auf die mit hoher Geschwindigkeit aus Spinndüsen gezogenen Glasfilamente können sofort nach ihrem Erstarren, d. h. noch vor dem Aufwickeln oder Schneiden, Schlichten aus Haftvermittler bzw. Haftvermittlersystem aufgetragen werden. Es ist aber auch möglich, die Fasern im Anschluss an den Spinnprozess in einem Tauchbad aus Haftvermittler bzw. Haftvermittlersystem zu beschlichten.

Die erfindungsgemäß insbesondere bevorzugt in den Faserhalbzeuglagen einzusetzenden Glasfasern weisen bevorzugt entweder eine kreisförmige Querschnittsfläche und einen mittleren Filament-Durchmesser im Bereich von 6 bis 18 μm, bevorzugt im Bereich von 9 bis 17 μm, oder eine flache Gestalt und nichtkreisförmige Querschnittsfläche, deren Hauptquerschnittsachse eine mittlere Breite im Bereich von 6 bis 40 μm und deren Nebenquerschnittsachse eine mittlere Breite im Bereich von 3 bis 20 μm besitzt, auf. Die Glasfasern werden bevorzugt aus der Gruppe der E-Glasfasern, A-Glasfasern, C-Glasfasern, D-Glasfasern, S-Glasfasern und / oder R-Glasfasern ausgewählt, wobei E-Glas besonders bevorzugt ist.

Die Fasern werden insbesondere mit einem geeigneten Schlichtesystem bzw. einem Haftvermittler bzw. Haftvermittlersystem auf Silanbasis ausgerüstet.

Besonders bevorzugte Haftvermittler auf Silanbasis für die Vorbehandlung der Glasfasern sind Silanverbindungen der allgemeinen Formel (III)

$$(X-(CH_2)_q)_k-Si-(O-C_rH_{2r+1})_{4-k} \qquad \text{(III)}$$

in der die Substituenten folgende Bedeutung haben:

X für $NH_2$-, HO- oder

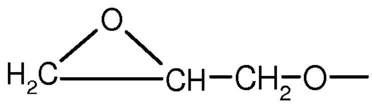

steht,

q für eine ganze Zahl von 2 bis 10, bevorzugt für 3 oder 4 steht,

r für eine ganze Zahl von 1 bis 5, bevorzugt für 1 oder 2 steht und

k für eine ganze Zahl von 1 bis 3, bevorzugt für 1 steht.

Ganz besonders bevorzugte Haftvermittler sind monomere organofunktionelle Silane, insbesondere 3-Aminopropyltrimethoxysilan, Aminobutyltrimethoxysilan, 3-Aminopropyltriethoxysilan, Amino-butyltriethoxysilan, 3-Aminopropyltrismethoxyethoxysilan, 3-Aminopropyl-methyl-diethoxysilan, N-Methyl-2-Aminoethyl-3-aminopropyltrimethoxysilan, N-Methyl-2-Aminoethyl-3-aminopropyl-methyl-dimethoxysilan, N-Methyl-3-aminopropyltrimethoxysilan, 3-Glycidyloxypropyl¬trimeth-oxysilan, 3-Methacryloxypropyltrimethoxysilan, 3-Mercaptopropyltrimethoxysilan, Vinyltriethoxysilan, Vinyltrimethoxysilan, N-β-(aminoethyl)-γ-aminopropyltrimethoxysilan (Dynasilan Damo von Hüls AG), N-β-(aminoethyl)-γ-amino¬propyltriethoxysilan, N-β-(aminoethyl)-γ-aminopropylmethyldimethoxysilan, N-β-(aminoethyl)-N-β-(aminoethyl)-γ-amino¬propyltri-methoxysilan.

Die Silanverbindungen werden im Allgemeinen in Mengen im Bereich von 0,05 bis 5 Gew.-%, vorzugsweise im Bereich von 0,1 bis 1,5 Gew.-% und insbesondere in Mengen im Bereich von 0,25 bis 1 Gew.-% bezogen auf den Füllstoff zur Oberflächenbeschichtung eingesetzt.

In einer Ausführungsform der Erfindung werden Kombinationen von Geweben aus Kohlenstofffasern und Geweben aus Glasfasern oder Gewebe, die sowohl Glas- als auch Kohlenstofffasern enthalten, eingesetzt. Bevorzugt sind im erfindungsgemäßen, flammgeschützten, einschichtigen Faser-Matrix-Halbzeug Gewebekombinationen mit einem Lagenaufbau enthaltend in den Außenlagen Kohlenstofffasergewebe und in wenigstens einer Innenlage Glasfasergewebe.

In den erfindungsgemäß bevorzugt einzusetzenden Geweben sind die zu verwendenden Fasern in der Weise angeordnet, dass zumindest eine Faser oder ein Faserstrang mindestens eine andere Faser oder einen anderen Faserstrang berührt. Die dabei zu verwendenden Bindungen sowie die dafür zu verwendenden Kurzzeichen sind in der DIN 61101-1 und in der DIN ISO 9354 festgelegt.

Vorzugsweise einzusetzende Gewebe weisen eine Leinwand-, Köper-, Satin-, Atlas- oder eine Dreherbindung auf. Besonders bevorzugt sind Gewebe mit Leinwand- oder Köperbindung.

Bevorzugte Gewebe mit Köperbindung sind Gleichgratköper, Mehrgratköper, Breitgratköper, Steilgratköper, Flachgratköper, Spitzgratköper, Fischgratköper, Kreuzgratköper, mit Satin- oder Atlasbindung. Besonders bevorzugte Köpergewebe sind Köper 2/2, Köper 2/1 oder Köper 3/1.

**Verfahrensschritt b)**

Erfindungsgemäß wird als Matrixpolymer ein Compound auf Basis wenigstens eines Polyamids [Komponente A)] mit einer relativen Lösungsviskosität bei 25°C in m-Kresol im Bereich von 2,0 bis 4,0 bevorzugt im Bereich von 2,2 bis 3,5 ganz besonders im Bereich von 2,4 bis 3,1, eingesetzt. Die Messung der relativen Lösungsviskosität $\eta_{rel}$ erfolgt gemäß EN ISO 307. Das Verhältnis der Auslaufzeit t des in m-Kresol gelösten Polyamids zur Auslaufzeit t (0) des Lösungsmittels m-Kresol bei 25°C ergibt die relative Lösungsviskosität gemäß der Formel $\eta_{rel}$ = t/t(0).

Das als Komponente A) einzusetzende **Polyamid** (PA) kann aus unterschiedlichen Bausteinen synthetisiert und nach verschiedenen Verfahren hergestellt werden und im speziellen Anwendungsfall allein eingesetzt oder in dem Fachmann bekannter Weise zu Werkstoffen mit speziell eingestellten Eigenschaftskombinationen ausgerüstet werden. Geeignet sind auch PA-Blends mit Anteilen von anderen Polymeren, bevorzugt von Polyethylen, Polypropylen, ABS, wobei gegebenenfalls ein oder mehrere Kompatibilisatoren eingesetzt werden können. Die Eigenschaften der Polyamide können nach Bedarf durch Zusatz von Elastomeren verbessert werden.

Zur Herstellung von PA sind eine Vielzahl von Verfahrensweisen bekannt geworden, wobei je nach gewünschtem Endprodukt unterschiedliche Monomerbausteine oder verschiedene Kettenregler zur Einstellung eines angestrebten Molekulargewichtes oder auch Monomere mit reaktiven Gruppen für später beabsichtigte Nachbehandlungen eingesetzt werden.

Bevorzugt einzusetzendes PA wird über Polykondensation in der Schmelze hergestellt, wobei im Rahmen der vorliegenden Erfindung auch die hydrolytische Polymerisation von Lactamen als Polykondensation verstanden.

Erfindungsgemäß bevorzugt einzusetzendes PA geht von Diaminen und Dicarbonsäuren und/oder Lactamen mit wenigstens 5 Ringgliedern oder entsprechenden Aminosäuren aus. Als Edukte kommen bevorzugt aliphatische und/oder aromatische Dicarbonsäuren, besonders bevorzugt Adipinsäure, 2,2,4-Trimethyladipinsäure, 2,4,4-Trimethyladipinsäure, Azelainsäure, Sebazinsäure, Isophthalsäure, Terephthalsäure, aliphatische und/oder aromatische Diamine, besonders bevorzugt Tetramethylendiamin, Hexamethylendiamin, 1,9-Nonandiamin, 2,2,4- und 2,4,4-Trimethylhexamethylendiamin, die Isomeren Diamino-dicyclohexylmethane, Diaminodicyclohexylpropane, Bisaminotnethyl-cyclohexan, Phenylendiamine, Xylylendiamine, Aminocarbonsäuren, insbesondere Aminocapronsäure, oder die entsprechenden Lactame in Betracht. Copolyamide aus mehreren der genannten Monomeren sind eingeschlossen.

Besonders bevorzugt wird PA aus Lactamen eingesetzt, ganz besonders bevorzugt werden Caprolactame, insbesondere bevorzugt wird $\varepsilon$-Caprolactam eingesetzt.

Auch durch aktivierte anionische Polymerisation hergestelltes PA oder durch aktivierte anionische Polymerisation hergestelltes Copolyamid mit Polycaprolactam als Hauptbestandteil kann erfindungsgemäß eingesetzt werden. Die aktivierte anionische Polymerisation von Lactamen zu Polyamiden wird in technischem Maßstab so durchgeführt, dass man einerseits eine Lösung von Katalysator in Lactam, gegebenenfalls zusammen mit Additiven, insbesondere mit Schlagzähmodifikator, und andererseits eine Lösung von Aktivator in Lactam herstellt, wobei üblicherweise beide Lösungen so zusammengesetzt sind, dass ein Zusammengeben im gleichen Verhältnis die gewünschte Gesamtrezeptur ergibt. Weitere Additive können gegebenenfalls der Lactamschmelze zugegeben werden. Die Polymerisation erfolgt durch Vermischen der Einzellösungen zur Gesamtrezeptur bei Temperaturen im Bereich von 80°C bis 200°C, bevorzugt bei Temperaturen im Bereich von 100°C bis 140°C. Als Lactame kommen cyclische Lactame mit 6 bis 12 C-Atomen in Frage, bevorzugt Laurinlactam oder $\varepsilon$-Caprolactam, besonders bevorzugt $\varepsilon$-Caprolactam. Der Katalysator ist ein Alkali- oder Erdalkalilactamat, bevorzugt als Lösung in Lactam, besonders bevorzugt Natriumcaprolactamat in $\varepsilon$-Caprolactam. Als Aktivator im erfindungsgemäßen Sinne können N-Acyllactame oder Säurechloride oder, bevorzugt, aliphatische Isocyanate, besonders bevorzugt Oligomere des Hexamethylendiisocyanats eingesetzt werden. Als Aktivator kann sowohl die Reinsubstanz wie auch bevorzugt eine Lösung, bevorzugt in N-Methylpyrrolidon, dienen.

Vorzugsweise werden teilkristalline Polyamide im Compound für das Matrixpolymer eingesetzt. Teilkristalline Polyamide besitzen gemäß DE 10 2011 084 519 A1 eine Schmelzenthalpie im Bereich von 4 bis 25 J/g, gemessen mit der DSC-Methode gemäß ISO 11357 beim 2. Aufheizen und Integration des Schmelzpeaks. Im Gegensatz dazu besitzen amorphe Polyamide eine Schmelzenthalpie von weniger als 4 J/g, gemessen mit der DSC-Methode gemäß ISO 11357 beim 2. Aufheizen und Integration des Schmelzpeaks. Besonders geeignet sind Polyamide mit einer Zahl an Aminoendgruppen im Bereich von 25 bis 90 mmol/kg, bevorzugt im Bereich 30 bis 70 mmol/kg, ganz besonders im Bereich von 35 bis 60 mmol/kg.

Ganz besonders bevorzugt wird als Matrixpolymer ein auf Polyamid 6 oder auf Polyamid 66 oder auf aliphatischen oder/und aromatischen Polyamiden bzw. Copolyamiden basierendes Compound, bei denen auf eine Polyamidgruppe in der Polymerkette 3 bis 11 Methylengruppen kommen, eingesetzt Insbesondere bevorzugt wird als Matrixpolymer ein auf Polyamid 6 [CAS Nr. 25038-54-4] oder auf Polyamid 66 [CAS Nr. 32131-17-2] basierendes Compound eingesetzt. Die im Rahmen der vorliegenden Anmeldung benutzte Kennzeichnung der Polyamide entspricht EN ISO 1874-1:2010, wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA6, so bedeutet dies, dass von einer $\alpha,\omega$- Aminocarbonsäure bzw. von dem davon abgeleiteten Lactam, im Falle des PA 6 also dem $\varepsilon$-Caprolactam,

ausgegangen worden ist.

Vorzugsweise werden die als Komponente B) und die gegebenenfalls einzusetzenden Komponenten C) und/oder Komponente D) und/oder Komponente E) und/oder Komponente F) während der Compoundierung im wenigstens einen Polyamid dispergiert. Das Dispergieren erfolgt vorzugsweise mittels eines Schmelzmischverfahrens. Für ein solches Schmelzmischverfahren einzusetzende Mischwerkzeuge sind vorzugsweise Einzel- oder Doppelschneckenextruder oder Banbury-Mischer. Die jeweiligen Komponenten bzw. das als Komponente B) einzusetzende Flammschutzmittel werden entweder alle auf einmal in einer einzigen Stufe oder schrittweise und dann in der Schmelze des Polyamids vermischt. Beim schrittweise Hinzufügen der Additive zum Polyamid wird zunächst ein Teil der Additive diesem zugegeben und in dessen Schmelze vermischt. Anschließend werden weitere Additive zugegeben und dann solange gemischt, bis eine homogene Polyamidzubereitung, das erfindungsgemäß einzusetzende Compound, erhalten wird. Diese Mischung wird als Strang ausgetragen, bis zur Granulierfähigkeit abgekühlt und dann granuliert.

Der Auftrag des Compounds auf die Gesamtheit der Faserhalbzeuglagen erfolgt vorzugsweise mittels Lösungsmittel, mittels Folie oder Film, in Form seiner Schmelze oder in Pulverform. Besonders bevorzugt wird das als Matrix einzusetzende Compound im Verfahrensschritt b) in Form eines Pulvers oder in Form einer Folie bereitgestellt, insbesondere bevorzugt in Pulverform.

Im Falle des bevorzugten Auftrags in Form von Pulver liegt das Compound in der Regel als Granulat, Flakes oder in Form anderer makroskopischer Teile vor. Vorzugsweise erfolgt das Mahlen des Compounds zu einem Pulver bei tiefen Temperaturen als sogenanntes kryogenes Mahlen. Im Falle des Auftrags in Form einer Folie wird das Compound einem Extrusionsverfahren unterzogen.

In einer alternativen Ausführungsform kann das Compound in Form einer Schmelze oder Dispersion in einem Lösungsmittel für den Auftrag auf die Endlosfasern enthaltenden Faserhalbzeuglagen bereitgestellt werden.

In einem alternativen Verfahren kann das bereits in Form eines Pulvers vorliegende Compound, enthaltend mindestens die Komponenten A) und B) auch mit weiteren pulverförmigen Komponenten gemischt werden. Bevorzugt wird dabei das als Pulver vorliegende Compound in einem Pulvermischer mit anderen pulverförmigen Komponenten gemischt. Ebenfalls möglich ist es, nur einen Teil der Komponenten über das Schmelzmischverfahren und den restlichen Teil nachfolgend dem zu einem Pulver vermahlenen Compound beizumischen.

**Verfahrensschritt c)**

Der Auftrag des Compounds auf die Gesamtheit der Faserhalbzeuglagen, auch als textiles Halbzeug bezeichnet, im Verfahrensschritt c) erfolgt mittels konventioneller Mittel, vorzugsweise durch Streuen, Rieseln, Drucken, Spritzen, Sprühen, Tränken, Benetzen im Schmelzebad, thermisches Spritzen oder Flammspritzen, oder durch Fließbett-Beschichtungsverfahren. In einer Ausführungsform können mehrere Schichten des Compounds auf die Gesamtheit aller Faserhalbzeuglagen aufgebracht werden. In einer Ausführungsform wird das Compound in Form einer Folie auf die Gesamtheit der Faserhalbzeuglagen aufgetragen.

Vorzugsweise erfolgt der Auftrag des Compounds auf die Gesamtheit aller Faserhalbzeuglagen in Mengen, woraus ein nach DIN 1310 definierter Volumenanteil an Fasermaterialien im Faser-Matrix-Halbzeug nach DIN 1310 im Bereich von 25 bis 65%, vorzugsweise im Bereich von 30 bis 55%, besonders bevorzugt im Bereich 40 bis 50%,resultiert.

In einer Ausführungsform folgt dem Pulverauftrag ein Sinterschritt, bei dem das pulverförmige Compound auf der Gesamtheit aller Faserhalbzeuglagen gesintert wird. Durch das Sintern, gegebenenfalls unter Druck, wird das pulverige Compound Pulver erhitzt, wobei die Temperatur jedoch unterhalb der Schmelztemperatur des im Compound eingesetzten Polyamids bleibt. Dabei kommt es in der Regel zu einer Schwindung, weil sich die Pulverpartikel verdichten und Porenräume in der Gesamtheit aller Faserhalbzeuglagen, auch als textiles Halbzeug bezeichnet, aufgefüllt werden.

Anschließend wird das mit Compound beaufschlagte Faserhalbzeug im Verfahrensschritt d) dem Einfluss von Druck und Temperatur unterzogen. Vorzugsweise erfolgt dies unter Vorwärmen des mit Compound beaufschlagten textilen Halbzeugs außerhalb der Druckzone.

**Verfahrensschritt d)**

Im Verfahrensschritt d) wird das mit Compound beaufschlagte textile Halbzeug aufgeheizt, um die Imprägnierung und Konsolidierung desselben einzuleiten. Zusätzlich wird hierzu Druck angewandt.

Durch den Einfluss von Druck und Wärme schmilzt das Compound und durchdringt die Faserlagen des textilen Halbzeugs, dessen Fasern damit imprägniert werden. Durch Entweichen von vorhandener Luft oder sich im Verfahrensschritt d) bildendem Gas aus den Hohlräumen des textilen Halbzeugs, aber auch aus den Hohlräumen zwischen Compound und Fasermaterial, findet die Konsolidierung statt. Die Gase enthalten vorzugsweise Gas der Umgebung, insbesondere Luft oder Stickstoff, und/oder Wasser, vorzugsweise in Dampfform, und/oder thermische Zersetzungsprodukte des eingesetzten Polyamids.

Vorzugsweise wird im Verfahrensschritt d) ein Druck im Bereich von 2 bis 100 bar, besonders bevorzugt im

Bereich von 10 bis 40 bar, angewandt.

Die im Verfahrensschritt d) anzuwendende Temperatur ist größer oder gleich der Schmelztemperatur des wenigstens einen Polyamids bzw. des wenigstens Polyamid und Flammschutzmittel enthaltenden Compounds. In einer Ausführungsform liegt die im Verfahrensschritt d) anzuwendende Temperatur mindestens 10°C über der Schmelztemperatur des wenigstens einen Polyamids. In einer weiteren Ausführungsform liegt die anzuwendende Temperatur mindestens 20°C über der Schmelztemperatur des wenigstens einen Polyamids. Die Beheizung kann durch eine Vielzahl von Mitteln erfolgen, vorzugsweise Kontaktheizung, strahlende Gasheizung, Infrarotheizung, Konvektion oder erzwungene Konvektion, Induktionsheizung, Mikrowellenheizung oder Kombinationen davon. Im unmittelbaren Anschluss daran erfolgt die Konsolidierung.

Die Vorgänge der Imprägnierung und Konsolidierung sind insbesondere abhängig von den Parametern Temperatur und Druck. In einer Ausführungsform ist der anzuwendende Druck zusätzlich noch von der Zeit abhängig.

Die genannten Parameter werden in der Weise angewandt, bis das resultierende Faser-Matrix-Halbzeug einen Gehalt an Luft oder Gas von weniger als 15 Vol.-%, bevorzugt von weniger als 10 Vol.-%, insbesondere von weniger als 5 Vol.-% aufweist. Besonders bevorzugt wird angestrebt, dass der Gehalt an Luft oder Gas, also der Hohlraumgehalt, von weniger als 5% innerhalb einer Zeitdauer von weniger als 10 Minuten, bei Temperaturen oberhalb 100°C erzielt wird, besonders bevorzugt bei Temperaturen im Bereich von 100°C bis 350°C. Vorzugsweise werden Drücke oberhalb von 20 bar angewandt.

Die Druckbeaufschlagung kann durch ein statisches Verfahren oder durch ein kontinuierliches Verfahren (auch als dynamischer Prozess bekannt) erfolgen, wobei ein kontinuierliches Verfahren aus Geschwindigkeitsgründen bevorzugt ist.

In einer Ausführungsform kann im Verfahrensschritt d) das zu erzeugende Faser-Matrix-Halbzeug durch ein gleichzeitig anzuwendendes Formgebungsverfahren in eine gewünschte Geometrie oder Konfiguration geformt werden. Bevorzugte Formgebungsverfahren für die geometrische Gestaltung von Faser-Matrix-Halbzeugen sind Formpressen, Stanzen, Pressen oder jedes Verfahren unter Verwendung von Wärme und / oder Druck. Besonders bevorzugt ist das Pressen. Vorzugsweise wird beim Formgebungsverfahren der Druck durch die Verwendung einer hydraulischen Formpresse aufgetragen. Beim Pressen wird auf eine Temperatur oberhalb der Schmelztemperatur des Polyamids bzw. Compounds vorgewärmt und mit einer Form-, einer Formungseinrichtung oder einem Formwerkzeug, insbesondere wenigstens einer Formpresse, die gewünschte Form bzw. Geometrie des aus dem erfindungsgemäßen, einschichtigen Faser-Matrix-Halbzeug herzustellenden Erzeugnisses erzielt.

Zur Erzielung optimaler mechanischer Eigenschaften im zu erzeugenden flammgeschützten einschichtigen Faser-Matrix-Halbzeug ist eine möglichst vollständige Imprägnierung der erfindungsgemäß einzusetzenden Faserhalbzeuglagen wünschenswert. Der Grad der Imprägnierung lässt sich durch einen möglichst geringen Hohlraumgehalt bzw. Gasanteil messen, insbesondere durch eine Dichtebestimmung gemäß DIN EN ISO 1183-1 (2013-04) oder durch Schliffbildmikroskopie.

Das Prinzip des Imprägnierens besteht im Tränken einer trockenen Faserstruktur mit einer Matrix aus Thermoplasten bzw. Thermoplastzubereitung. Das Durchströmen des Faserhalbzeugs ist mit dem Fließen eines inkompressiblen Fluids durch ein poröses Grundmedium vergleichbar. Die Strömung wird mit Hilfe der Navier-Stokes Gleichung beschrieben:

$$\rho \frac{dv}{dt} = -\nabla P + \eta \nabla^2 v$$

worin p die Dichte, *v* den Geschwindigkeitsvektor, $\nabla P$ den Druckgradienten und $\eta$ die Viskosität des verwendeten Fluids bedeuten. Geht man davon aus, dass die Strömungsgeschwindigkeit des erfindungsgemäß einzusetzenden Compounds - auch als Matrix bezeichnet - in der Verstärkungsstruktur als gering einzustufen ist, können die Trägheitskräfte in obiger Gleichung (deren linke Seite) vernachlässigt werden. Folglich vereinfacht sich die Gleichung zu der als Stokes-Gleichung bekannten Form:

$$0 = -\nabla P + \eta \nabla^2 v$$

Zeitgleich zur Imprägnierung oder im Anschluss an die Imprägnierung findet die Konsolidierung statt, worunter man das Exprimieren von eingeschlossener Luft und anderen Gasen versteht. Auch die Konsolidierung ist insbesondere abhängig von den Parametern Temperatur und Druck sowie zusätzlich gegebenenfalls von der Zeit.

Beide Eigenschaften, der Grad der Imprägnierung und der Konsolidierung, lassen sich durch die Bestimmung mechanischer Kennwerte messen bzw. überprüfen, insbesondere durch Messung der Zugfestigkeit an Faser-Matrix-Halbzeug Probekörpern. Zur Ermittlung der Zugfestigkeit dient der Zugversuch, ein quasistatisches, zerstörendes Prüfverfahren, im Falle von Kunststoffen nach ISO 527-4 oder -5.

Da sowohl der Vorgang der Imprägnierung als auch der Vorgang der Konsolidierung von den Parametern Temperatur und Druck abhängig sind, wird der Fachmann diese Parameter dem jeweils Polyamid anpassen. Zudem wird er auch den Zeitraum, über den der Druck angewandt wird, entsprechend dem einzusetzenden Polyamid anpassen.

Damit die Imprägnierung und die Konsolidierung zu erfindungsgemäßen einschichtigen Faser-Matrix-Halbzeugen führt, wird Verfahrensschritt d) vorzugsweise in wenigstens einer kontinuierlichen Formpresse, Doppelbandpresse oder Intervallheizpresse durchgeführt. Insbesondere bevorzugt wird eine Doppelbandpresse eingesetzt.

Bevorzugte Imprägniertechnik ist die Laminierung. Bevorzugte Laminierungstechniken umfassen ohne Einschränkung Kalander, Flachbett-Laminierung und Doppelbandpresse-Laminierung. Wenn das Imprägnierungsverfahren als Laminierung durchgeführt wird, ist vorzugsweise eine gekühlte Doppelbandpresse (siehe EP 0 485 895 B1) oder eine Intervallheizpresse einzusetzen.

Das erfindungsgemäße Imprägnierverfahren zeichnet sich durch schnelle Imprägnierung und hohe Produktivität aus und erlaubt einschichtige Faser-Matrix-Halbzeuge in hohen Raten und geringem Anteil an Poren oder Lufteinschlüssen zu erzeugen.

**Verfahrensschritt e)**

Nach dem Konsolidieren lässt man das erzeugte Faser-Matrix-Halbzeug auf eine Temperatur unterhalb der Schmelztemperatur des Matrixpolymers bzw. des Polyamid und Flammschutzmittel enthaltenden Compounds abkühlen, auch als Solidifikation bezeichnet, und entnimmt es aus der Presse. Der Begriff der Solidifikation beschreibt das Erstarren des Gemisches aus Faserstruktur und flüssiger Matrix durch Abkühlen oder durch chemische Vernetzung zu einem Festkörper. Vorzugsweise fällt das erfindungsgemäße einschichtige Faser-Matrix-Halbzeug nach dem Pressvorgang als Plattenware an. Im Falle einer gleichzeitigen Formgebung kann des erfindungsgemäße einschichtige Faser-Matrix-Halbzeug auch in einer vorzugebenden Formgebung anfallen.

Erfolgte im Verfahrensschritt d) jedoch gleichzeitig eine Formgebung, so wird nach dem Abkühlen auf eine Temperatur unterhalb der Schmelztemperatur des Matrixpolymers bzw. des Polyamid und Flammschutzmittel enthaltenden Compounds, vorzugsweise auf Raumtemperatur (23 +/- 2°C), das Faser-Matrix-Halbzeug der Form entnommen.

Bei der Herstellung thermoplastischer FKV-Plattenhalbzeuge wie den erfindungsgemäßen Faser-Matrix-Halbzeugen wird in Abhängigkeit von den zu erzielenden Materialdurchsätzen in Film-Stacking-, Prepreg- und Direktverfahren unterschieden (FKV = Faser-Kunststoff-Verbund). Für hohen Materialdurchsatz werden im Fall der Direktverfahren die Matrix- und die Textilkomponente direkt im Bereich des Materialeinlaufs des Pressprozesses zusammengeführt. Dies ist in der Regel mit einem hohen anlagentechnischen Aufwand verbunden. Für geringe bis mittlere Mengen wird neben den Prepregverfahren häufig das Film-Stacking-Verfahren eingesetzt. Hierbei durchläuft ein aus alternierend angeordneten Folien- und Textillagen bestehender Aufbau den Pressprozess. Die Art des Pressprozesses orientiert sich am geforderten Materialausstoß und der Materialvielfalt. Hier unterscheidet man, nach zunehmendem Materialdurchsatz, zwischen statischen, semi-kontinuierlichen und kontinuierlichen Verfahren. Der anlagentechnische Aufwand und die Anlagenkosten steigen dabei mit der Zunahme des Materialdurchsatzes (**AKV- Industrievereinigung Verstärkte Kunststoffe e.V.,** Handbuch Faserverbund-Kunststoffe, 3. Aufl. 2010, Vieweg-Teubner, 236).

Erfindungsgemäße einschichtige und zudem flammgeschützte Faser-Matrix-Halbzeuge können für eine Vielzahl von Anwendungen eingesetzt werden. Vorzugsweise werden sie im Automotive Bereich als Komponenten für Pkw, Lkw, Verkehrsflugzeuge, in der Luft- und Raumfahrt, in der Bahn, aber auch für Garten- und Haushaltsgeräte, als Computer-Hardware, in handgeführten elektronischen Geräten, in Freizeitartikeln und Sportgeräten, als Strukturbauteile für Maschinen, in Gebäuden, in Photovoltaikanlagen oder in mechanischen Vorrichtungen eingesetzt. Der jeweilige Einsatz erfordert unter Umständen entsprechend additivierte Compounds zur Beaufschlagung des Faserhalbzeugs.

**Über-, um-, hinter- oder angespritzte Ausführungsvarianten**

In einer Ausführungsform wird das erfindungsgemäße, einschichtige Faser-Matrix-Halbzeug überspritzt, umspritzt, hinterspritzt oder es werden Funktionselemente angespritzt. Das Überspritzen, Umspritzen, Hinterspritzen oder das Anspritzen bzw. Anformen weiterer Funktionselemente erfolgt durch Gießen oder Spritzgießen, bevorzugt Spritzgießen. Dieses kann vollflächig, partiell oder umlaufend erfolgen. Das Spritzgießen kann dabei ein Hinterspritzen und/oder Anspritzen und/oder Umspritzen sein. Diese Technik ist als In-Mold-Forming (IMF) bekannt, ein integratives Spritzgieß-Sonderverfahren, das zur Herstellung hybrider Strukturbauteile aus unterschiedlichen Werkstoffen dient; siehe http://www.industrieanzeiger.de/home/-/article/12503/11824771/. Durch IMF ist es möglich, im Kantenbereich eines Faser-Matrix-Halbzeugs freiliegende Verstärkungsfasern einzuschließen. Hierdurch wird ein Strukturbauteil mit

besonders glatten Kanten erzeugt. Durch das IMF wird aber auch ein anzuformendes Funktionselement geformt und gleichzeitig mit der Faser-Matrix-Halbzeug-Komponente verbunden, insbesondere ohne Einsatz zusätzlicher Klebemittel. Das Prinzip des IMF ist auch aus DE 4101106 A1, US 6036908 B, US 6475423 B1 oder WO 2005/070647 A1 bekannt.

Für eine Spritzgusszusammensetzung zur erfindungsgemäß bevorzugten Anwendung im IMF kommen vorzugsweise dieselben Kunststoffe infrage, die bereits als Matrixpolymer im einschichtigen Faser-Matrix-Halbzeug eingesetzt wurden, hier also Polyamide, vorzugsweise teilkristalline Polyamide. Insbesondere bevorzugt werden als Spritzgussmasse PA 6 oder PA 66 bzw. auf diesen Polyamiden basierende Compounds eingesetzt.

In einer ganz besonders bevorzugten Ausführungsform werden sowohl die Faser-Matrix-Halbzeug-Komponente als auch die im IMF anzuwendende Spritzguss-Komponente aus demselben Polyamid gefertigt.

Bevorzugte Funktionselemente aus der Spritzgusskomponente sind Befestigungen oder Halterungen und sonstige Applikationen, die nicht durch die Faser-Matrix-Halbzeug-Komponente, sondern aufgrund eventueller geometrischer Komplexität mittels IMF durch die Spritzguss-Komponente abgebildet werden müssen.

Zur Durchführung des IMF wird ein erfindungsgemäßes, einschichtiges Faser-Matrix-Halbzeug in ein Formwerkzeug, vorzugsweise ein Spritzgießwerkzeug, mit entsprechend gestaltetem Formhohlraum eingelegt. Anschließend wird die Spritzguss-Komponente eingespritzt. Ziel dabei ist, dass es zwischen dem Polymer der Faser-Matrix-Halbzeug-Komponente und dem Polymer der Spritzguss-Komponente zu einer stoffschlüssigen Verbindung kommt. Am besten erreicht man eine solche stoffschlüssige Verbindung, indem jene beiden Kunststoffe dieselbe Polymerbasis haben. Erfindungsgemäß bevorzugt ist, wenn beide Komponenten auf Polyamid 6 basieren, wobei auch das IMF von Prozessparametern wie Schmelztemperatur und Druck abhängig ist.

Bevorzugt betrifft die vorliegende Erfindung Faser-Matrix-Halbzeuge enthaltend

1 bis 100 Faserhalbzeuglagen aus Endlosfasern, bevorzugt 2 bis 40 Faserhalbzeuglagen, besonders bevorzugt 2 bis 10 Faserhalbzeuglagen, wobei die Faserhalbzeuglagen jeweils ein Flächengewicht im Bereich von 5 $g/m^2$ bis 3000 $g/m^2$, bevorzugt im Bereich von 100 $g/m^2$ bis 900 $g/m^2$, besonders bevorzugt im Bereich von 150 $g/m^2$ bis 750 $g/m^2$, aufweisen,

und die Gesamtheit aller Faserhalbzeuglagen mit einem Compound enthaltend als Komponente A) Polyamid 6 imprägniert ist,

und das Faser-Matrix-Halbzeug einen nach DIN 1310 definierten Volumenanteil an Fasermaterialien im Bereich von 25 bis 65%, vorzugsweise im Bereich von 30 bis 55%, besonders bevorzugt im Bereich 40 bis 50%, und

einen Volumenanteil an Luft oder Gas von weniger als 15%, vorzugsweise weniger als 10%, besonders bevorzugt weniger als 5% aufweist, und worin

das Compound bezogen auf 100 Massenanteile der Komponente A) zusätzlich als Komponente B) 5 bis 100 Massenanteile Aluminium-tris(diethylphosphinat) enthält und die Faserhalbzeuglagen die Endlosfasern in Form eines Gewebes oder Geleges, vorzugsweise Gewebes, enthalten.

Besonders bevorzugt betrifft die vorliegende Erfindung Faser-Matrix-Halbzeuge enthaltend

1 bis 100 Faserhalbzeuglagen aus Endlosfasern, bevorzugt 2 bis 40 Faserhalbzeuglagen, besonders bevorzugt 2 bis 10 Faserhalbzeuglagen, wobei die Faserhalbzeuglagen jeweils ein Flächengewicht im Bereich von 5 $g/m^2$ bis 3000 $g/m^2$, bevorzugt im Bereich von 100 $g/m^2$ bis 900 $g/m^2$, besonders bevorzugt im Bereich von 150 $g/m^2$ bis 750 $g/m^2$, aufweisen,

und die Gesamtheit aller Faserhalbzeuglagen mit einem Compound enthaltend als Komponente A) Polyamid 6 als Matrixpolymer imprägniert ist,

und das Faser-Matrix-Halbzeug einen nach DIN 1310 definierten Volumenanteil an Fasermaterialien im Bereich von 25 bis 65%, vorzugsweise im Bereich von 30 bis 55%, besonders bevorzugt im Bereich 40 bis 50%, und

einen Volumenanteil an Luft oder Gas von weniger als 15%, vorzugsweise weniger als 10%, besonders bevorzugt weniger als 5%, aufweisen und worin

das Compound bezogen auf 100 Massenanteile der Komponente A) zusätzlich als Komponente B) 5 bis 100 Massenanteile Aluminium-tris(diethylphosphinat) und zudem als Komponente C) Melaminpolyphosphat, vorzugsweise in Mengen im Bereich von 1 bis 40 Massenanteilen bezogen auf 100 Massenanteile der Komponente A), enthält und die Faserhalbzeuglagen die Endlosfasern in Form eines Gewebes oder Geleges, vorzugsweise Gewebes, enthalten.

Ganz besonders bevorzugt betrifft die vorliegende Erfindung Faser-Matrix-Halbzeuge enthaltend

1 bis 100 Faserhalbzeuglagen aus Endlosfasern, bevorzugt 2 bis 40 Faserhalbzeuglagen, besonders bevorzugt 2 bis 10 Faserhalbzeuglagen, wobei die Faserhalbzeuglagen jeweils ein Flächengewicht im Bereich von 5 $g/m^2$ bis 3000 $g/m^2$, bevorzugt im Bereich von 100 $g/m^2$ bis 900 $g/m^2$, besonders bevorzugt im Bereich von 150 $g/m^2$ bis 750 $g/m^2$, aufweisen,

und die Gesamtheit aller Faserhalbzeuglagen mit einem Compound enthaltend als Komponente A) Polyamid 6 imprägniert ist,

und das Faser-Matrix-Halbzeug einen nach DIN 1310 definierten Volumenanteil an Fasermaterialien im Bereich von 25 bis 65%, vorzugsweise im Bereich von 30 bis 55%, besonders bevorzugt im Bereich 40 bis 50%, und

einen Volumenanteil an Luft oder Gas von weniger als 15%, vorzugsweise weniger als 10%, besonders bevorzugt

weniger als 5%, aufweist und worin
das Compound bezogen auf 100 Massenanteile der Komponente A) zusätzlich als Komponente B) 5 bis 100 Massenanteile Aluminium-tris(diethylphosphinat), als Komponente C) Melaminpolyphosphat, vorzugsweise in Mengen im Bereich von 1 bis 40 Massenanteilen, und zudem als Komponente D) Zinkborat, vorzugsweise in Mengen im Bereich von 0,1 bis 20 Massenanteilen, jeweils bezogen auf 100 Massenanteile der Komponente A), enthält und die Faserhalbzeuglagen die Endlosfasern in Form eines Gewebes oder Geleges, vorzugsweise Gewebes, enthalten.

Insbesondere bevorzugt betrifft die vorliegende Erfindung Faser-Matrix-Halbzeuge enthaltend
1 bis 100 Faserhalbzeuglagen aus Endlosfasern, bevorzugt 2 bis 40 Faserhalbzeuglagen, besonders bevorzugt 2 bis 10 Faserhalbzeuglagen, wobei die Faserhalbzeuglagen jeweils ein Flächengewicht im Bereich von 5 $g/m^2$ bis 3000 $g/m^2$, bevorzugt im Bereich von 100 $g/m^2$ bis 900 $g/m^2$, besonders bevorzugt im Bereich von 150 $g/m^2$ bis 750 $g/m^2$, aufweisen,
und die Gesamtheit aller Faserhalbzeuglagen mit einem Compound enthaltend als Komponente A) Polyamid 6 imprägniert ist,
und das Faser-Matrix-Halbzeug einen nach DIN 1310 definierten Volumenanteil an Fasermaterialien im Bereich von 25 bis 65%, vorzugsweise im Bereich von 30 bis 55%, besonders bevorzugt im Bereich 40 bis 50%, und
einen Volumenanteil an Luft oder Gas von weniger als 15%, vorzugsweise weniger als 10%, besonders bevorzugt weniger als 5%, aufweist und worin
das Compound bezogen auf 100 Massenanteile der Komponente A) zusätzlich als Komponente B) 5 bis 100 Massenanteile Aluminium-tris(diethylphosphinat), als Komponente C) Melaminpolyphosphat, vorzugsweise in Mengen im Bereich von 1 bis 40 Massenanteilen, als Komponente D) Zinkborat, vorzugsweise in Mengen im Bereich von 0,1 bis 20 Massenanteilen, und zudem als Komponente E) Talkum, vorzugsweise in Mengen im Bereich von 0,01 bis 50 Massenanteilen, jeweils bezogen auf 100 Massenanteile der Komponente A), enthält und die Faserhalbzeuglagen die Endlosfasern in Form eines Gewebes oder Geleges, vorzugsweise Gewebes, enthalten.

Die vorliegende Erfindung betrifft auch die Verwendung wenigstens eines organischen Phosphinsäuresalzes der Formel (I) und/oder eines Diphosphinsäuresalzes der Formel (II) und/oder deren Polymere als Komponente B) zur flammfesten Ausrüstung einschichtiger, Polyamid (Komponente A)) basierter, Endlosfaser verstärkter Faser-Matrix-Halbzeuge, wobei die Faser-Matrix-Halbzeuge die Endlosfasern in Faserhalbzeuglagen in Form eines Gewebes oder Geleges, vorzugsweise Gewebes, enthalten.

Vorzugsweise betrifft die Erfindung die Verwendung der Kombination wenigstens einer Verbindung der Komponente B) mit wenigstens einer Verbindung der Komponente C) zur flammfesten Ausrüstung einschichtiger, Polyamid basierter, Endlosfaser verstärkter Faser-Matrix-Halbzeuge, wobei die Faser-Matrix-Halbzeuge die Endlosfasern in Faserhalbzeuglagen in Form eines Gewebes oder Geleges, vorzugsweise Gewebes, enthalten.

Besonders bevorzugte betrifft die vorliegende Erfindung die Verwendung der Kombination wenigstens einer Verbindung der Komponente B) mit wenigstens einer Verbindung der Komponente C) und wenigstens einer Verbindung der Komponente D) zur flammfesten Ausrüstung einschichtiger, Polyamid basierter, Endlosfaser verstärkter Faser-Matrix-Halbzeuge, wobei die Faser-Matrix-Halbzeuge die Endlosfasern in Faserhalbzeuglagen in Form eines Gewebes oder Geleges, vorzugsweise Gewebes, enthalten.

Ganz besonders bevorzugt betrifft die vorliegende Erfindung die Verwendung der Kombination wenigstens einer Verbindung der Komponente B) mit wenigstens einer Verbindung der Komponente C), wenigstens einer Verbindung der Komponente D) und wenigstens einer Verbindung der Komponente E) zur flammfesten Ausrüstung einschichtiger, Polyamid basierter, Endlosfaser verstärkter Faser-Matrix-Halbzeuge, wobei die Faser-Matrix-Halbzeuge die Endlosfasern in Faserhalbzeuglagen in Form eines Gewebes oder Geleges, vorzugsweise Gewebes, enthalten.

Die Erfindung betrifft zudem ein Verfahren zur flammfesten Ausrüstung einschichtiger, Polyamid (Komponente A)) basierter, Endlosfaser verstärkter Faser-Matrix-Halbzeuge ohne Reduktion der Faseranbindung, indem man als Komponente B) wenigstens ein organisches Phosphinsäuresalz der Formel (I) und/oder ein Diphosphinsäuresalz der Formel (II) und/oder deren Polymere einsetzt und die Faser-Matrix-Halbzeuge die Endlosfasern in Faserhalbzeuglagen in Form eines Gewebes oder Geleges, vorzugsweise Gewebes, enthalten.

Vorzugsweise betrifft die Erfindung ein Verfahren zur flammfesten Ausrüstung einschichtiger, Polyamid basierter, Endlosfaser verstärkter Faser-Matrix-Halbzeuge ohne Reduktion der Faseranbindung, indem man wenigstens eine Verbindung der Komponente B) mit wenigstens einer Verbindung der Komponente C) kombiniert und die Faser-Matrix-Halbzeuge die Endlosfasern in Faserhalbzeuglagen in Form eines Gewebes oder Geleges, vorzugsweise Gewebes, enthalten.

Besonders bevorzugt betrifft die vorliegende Erfindung ein Verfahren zur flammfesten Ausrüstung einschichtiger, Polyamid basierter, Endlosfaser verstärkter Faser-Matrix-Halbzeuge ohne Reduktion der Faseranbindung, indem man wenigstens eine Verbindung der Komponente B) mit wenigstens einer Verbindung der Komponente C) und wenigstens einer Verbindung der Komponente D) kombiniert und die Faser-Matrix-Halbzeuge die Endlosfasern in Faserhalbzeuglagen in Form eines Gewebes oder Geleges, vorzugsweise Gewebes, enthalten.

Ganz besonders bevorzugt betrifft die vorliegende Erfindung ein Verfahren zur flammfesten Ausrüstung einschichtiger, Polyamid basierter, Endlosfaser verstärkter Faser-Matrix-Halbzeuge ohne Reduktion der Faseranbindung, indem man wenigstens eine Verbindung der Komponente B) mit wenigstens einer Verbindung der Komponente C), wenigstens einer Verbindung der Komponente D) und wenigstens einer Verbindung der Komponente E) kombiniert und die Faser-Matrix-Halbzeuge die Endlosfasern in Faserhalbzeuglagen in Form eines Gewebes oder Geleges, vorzugsweise Gewebes, enthalten.

**Beispiele**

**Thermoplastmatrix**

Die Thermoplastmatrix wurde durch Compoundierung angefertigt. Die einzelnen Komponenten wurden dazu in einem Zweiwellenextruder (ZSK 26 Compounder der Fa. Coperion Werner & Pfleiderer (Stuttgart, Deutschland)) bei Temperaturen im Bereich von 250 bis 310°C gemischt, als Strang ausgetragen, bis zur Granulierfähigkeit abgekühlt, granuliert und anschließend gemahlen.

In den Versuchen wurde als thermoplastische Matrix i) verwendet:

Komponente A): Polyamid 6 mit einer relativen Lösungsviskosität in m-Kresol von 2,5 bei 25°C, (Durethan® B26, Fa. Lanxess Deutschland GmbH, Leverkusen, Deutschland)

Komponente B): Aluminium-tris(diethylphosphinat), [CAS-Nr. 225789-38-8] (Exolit® OP1240 der Fa. Clariant SE, Muttenz, Schweiz)

Komponenten C): Melaminpolyphosphat, [CAS-Nr. 218768-84-4] (Melapur® 200/70 der Fa. BASF, Ludwigshafen, Deutschland)

Komponente D): Zinkborat, [CAS-Nr. 12767-90-7] (Firebrake® 500 der Fa. Deutsche Borax GmbH Sulzbach, Deutschland)

Komponente E): Talkum (mikrokristallin), [CAS Nr. 14807-96-6], Mistron® R10 der Imerys Talc Group, Toulouse, Frankreich (Rio Tinto Group).

Komponente F): Weitere Additive aus Pigmenten (Ruß [CAS Nr. 1333-86-4]), Entformungsmittel (Ethylen-bis-stearylamid [CAS Nr. 110-30-5] als Loxiol® EBS von Emery Oleochemicals) und Thermostabilisator (1,6-Bis[3-(3,5-di-tert-butyl-4-hydroxyphenyl)propionylamino]-hexan [CAS-Nr. 23128-74-7] als Irganox® 1098 der Fa. BASF, Ludwigshafen, Deutschland). Die Zusammensetzung der Komponente F) stimmt in allen Beispielen überein.

**Faserhalbzeug**

Die in den Beispielen und im Vergleichsbeispiel für die Composites eingesetzten Endlosfasern enthaltenden Faserhalbzeuglagen waren ein Köpergewebe aus Filamentglas mit Webart Twill 2/2 mit 0,2 Gew.-% Silanschlichte und einem Flächengewicht von 200g/$m^2$. Die Dichte des dafür eingesetzten Glases lag bei 2,56 g/$cm^3$.

**Compositehalbzeuge**

Compositehalbzeuge von Beispielen und Vergleichsbeispiel wurden auf einer statischen Heizplattenpresse hergestellt. Die Faser-Matrix-Halbzeuge mit einer Kantenlänge von 420 mm x 420 mm bestanden aus 2 bzw. 4 Faserhalbzeuglagen sowie in einem Fall aus einer Polyamid-Compound-Matrix **M1** und in einem anderen Fall aus der Polyamid-Compound-Matrix **M2**, die gleichmäßig auf die Gesamtheit aller Faserhalbzeuglagen aufgebracht und verteilt wurden und jeweils in einem mittleren Faservolumengehalt von 45% und in einer Dicke von 0,5 mm bei 2 Lagen Faserhalbzeug bzw. von 1 mm bei 4 Lagen resultierten. Zur Konsolidierung und Imprägnierung zum Faser-Matrix-Halbzeug wurde jeweils ein Flächendruck von 24 bar und eine Temperatur von 300°C für 240s aufgeprägt. Die anschließende Abkühlung auf Raumtemperatur erfolgte bei gleichbleibendem Druck in 300s. Im entstandenen plattenförmigen Faser-Matrix-Halbzeug waren die Faserhalbzeuglagen somit homogen eingebettet, aufgrund des einheitlichen Einschicht-Matrixsystems entstanden keine Material- / Phasengrenzen innerhalb der Matrix; es konnte stofflich nicht zwischen innerer Einbettmasse und Oberfläche unterschieden werden.

**Compositehalbzeug 2** (Prüfkörper für mechanische Prüfung gemäß ISO178)

Zum Vergleich wurde ein Faser-Matrix-Halbzeug mit einer Kantenlänge von 420 mm x 420 mm aus 4 Faserhalbzeuglagen sowie einer Polyamid-Matrix **M3** die gleichmäßig mit einem mittleren Faservolumengehalt von 45% bzw. in einer Dicke von 1 mm hergestellt. Zur Konsolidierung und Imprägnierung wurde auch hier ein Flächendruck von 24 bar bei einer Temperatur von 300°C für 240s aufgeprägt. Die anschließende Abkühlung auf Raumtemperatur erfolgte bei gleichbleibendem Druck in 300s. Im entstandenen plattenförmigen Compositehalbzeug 2 waren die Faserhalbzeuglagen somit homogen eingebettet, aufgrund des einheitlichen Einschicht-Matrixsystems entstanden keine Material- / Phasengrenzen innerhalb der Matrix; es konnte stofflich nicht zwischen innerer Einbettmasse und Oberfläche unterschieden werden.

Der Faservolumengehalt wurde in allen Fällen gemäß DIN 1310 untersucht. Aus statistischen Gründen wurden dabei jeweils 5 Prüfkörper untersucht.

Die Compositehalbzeuge vom Typ 1 und 2 wurden weiterhin experimentell hinsichtlich des Porengehaltes, also des Einschlusses von Luft oder Gas, untersucht. Dazu wurde mittels eines Computertomografen Micro CT nanotom S des Herstellers General Electric Aufnahmen eines Querschnitts der Compositehalbzeuge 1 und von Compositehalbzeug 2 untersucht. Aus statistischen Gründen wurden jeweils drei Prüfkörper untersucht, an denen jeweils 5 Wiederholungsmessungen durchgeführt wurden. Mittels einer optischen Auswertesoftware konnte bei allen Compositehalbzeugen ein Porengehalt von 4 - 5% ermittelt werden. Aus statistischen Gründen wurden jeweils drei Prüfkörper untersucht, an denen jeweils 5 Wiederholungsmessungen durchgeführt wurden.

Die Compositehalbzeuge vom Typ 1 und Typ 2 wurden experimentell zudem hinsichtlich des lokalen Faservolumenanteils untersucht. Dazu wurde mittels eines Computertomografen Micro CT nanotom S des Herstellers General Electric Aufnahmen eines Querschnitts von Compositehalbzeug 1 und Compositehalbzeug 2 untersucht. Es wurde der Glasfasergehalt innerhalb der Proben bis in eine Tiefe von 50 μm ausgewertet. Aus statistischen Gründen wurden jeweils drei Prüfkörper eines jeden Compositehalbzeugs untersucht, an denen jeweils 5 Wiederholungsmessungen durchgeführt wurden. Bei Compositehalbzeugen vom Typ 2 wurden bis in eine Tiefe von 50 μm keine Glasfasern festgestellt, da diese sämtlich von der ungefüllten Oberflächenschicht bedeckt von der Oberfläche abgetrennt vorliegen. Somit betrug der Faservolumenanteil in diesem Bereich 0%. In den Compositehalbzeugen vom Typ 1 wurden keine separierenden Deckschichten ermittelt, sondern die Glasfaserbündel lagen homogen eingeschlossen und durchgehend bis an die Oberfläche vor, so dass auch im Bereich zwischen Oberfläche bis in eine Tiefe von 50 μm der beanspruchte Faservolumenanteil aufgefunden wurde.

Die Flammwidrigkeit der Faser-Matrix-Halbzeuge wurde nach der Methode UL94V (Underwriters Laboratories Inc. Standard of Safety, "Test for Flammability of Plastic Materials for Parts in Devices and Appliances", S. 14 - 18 Northbrook 1998) bestimmt. Die Prüfkörper der Abmessung 125 mm • 13 mm • 0,5 mm in Dicken wurden aus den vorgefertigten Faser-Matrix-Halbzeugen ("Compositehalbzeug") mit einer Wasserstrahlschneidanlage ausgeschnitten.

Mechanische Kennwerte erhielt man anhand der Biegefestigkeit aus Biegeexperimenten gemäß ISO 178. Die Prüfkörper der Abmessung 80 mm • 10 mm • 1 mm wurden hierzu aus den vorgefertigten Faser-Matrix-Halbzeugen ("Compositehalbzeug") mit einer Wasserstrahlschneidanlage ausgeschnitten.

Die Bewertung der Ergebnisse erfolgte nach der Höhe der Biegefestigkeit gemessen in MPa, jeweils bezogen auf ein Faservolumenanteil von 45%, wobei "o" dem für die Bewertung herangezogenen Referenzwert ohne Flammschutzadditive entspricht. Ein "+" kennzeichnet eine gegenüber dem Referenzwert gleichwertige oder höhere Biegefestigkeit, wobei unter "gleichwertig" unter Berücksichtigung der Messgenauigkeit Werte verstanden wurden, die innerhalb von ± 3% vom Referenzwert lagen. Ein "-" kennzeichnet entsprechend eine gegenüber dem Referenzwert um mehr als 3% niedrigere Biegefestigkeit.

**Tabelle 1**: Thermoplastische Matrix

| | | M1 | M2 | M3 |
|---|---|---|---|---|
| Komponente A) | [Gew.-Teile] | 100 | 100 | 100 |
| Komponente B) | [Gew.-Teile] | 50 | 50 | |
| Komponente C) | [Gew.-Teile] | 11,5 | 11,5 | |
| Komponente D) | [Gew.-Teile] | 2,3 | 2,3 | |
| Komponente E) | [Gew.-Teile] | | 5 | |
| Komponente F) | [Gew.-Teile] | 1,5 | 1,5 | 1,5 |

**Tabelle 2**: Composite-Halbzeug

| | | Bsp. 1 | Bsp. 2 | Vgl. 1 |
|---|---|---|---|---|
| Thermoplastische Matrix | | M1 | M2 | M3 |
| UL94 bei 0,5mm | Klasse | V-0 | V-0 | n.b. |
| Biegefestigkeit | Bewertung | + | + | o |

Die Prüfungsergebnisse zeigen, dass bei Verwendung der erfindungsgemäßen thermoplastischen Matrix nicht nur bessere Flammwidrigkeiten sondern überraschend auch zumindest gleichwertige Biegefestigkeiten erhalten werden, was darauf schließen lässt, dass durch die spezielle Kombination der Komponenten die Anbindung des Matrixpolymers an das Fasermaterial erhalten bleibt und ein erfindungsgemäßes Faser-Matrix-Halbzeug demzufolge nicht zu einer Delaminierung neigt.

## Patentansprüche

1. Faser-Matrix-Halbzeuge enthaltend
1 bis 100 Faserhalbzeuglagen aus Endlosfasern, wobei die Faserhalbzeuglagen jeweils ein Flächengewicht im Bereich von 5 g/$m^2$ bis 3000 g/$m^2$ aufweisen,
und die Gesamtheit aller Faserhalbzeuglagen mit einem Compound enthaltend als Komponente A) wenigstens ein Polyamid mit einer nach DIN EN ISO 307 bei 25°C zu bestimmenden relativen Lösungsviskosität in m-Kresol im Bereich von 2,0 bis 4,0 als Matrixpolymer imprägniert ist,
und das Faser-Matrix-Halbzeug
einen nach DIN 1310 definierten Volumenanteil an Fasermaterialien im Bereich von 25 bis 65%, und einen Volumenanteil an Luft oder Gas von weniger als 15% aufweist und worin
das Compound bezogen auf 100 Gewichtsteile der Komponente A) zusätzlich als Komponente B) 5 bis 100 Gewichtsteile wenigstens eines organischen Phosphinsäuresalzes der Formel (I) und/oder eines Diphosphinsäuresalzes der Formel (II) und/oder deren Polymere enthält,

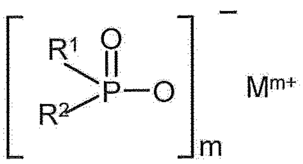 (I) 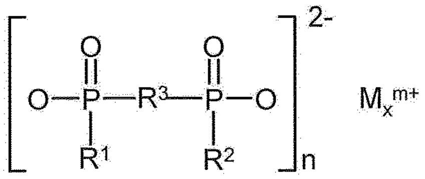 (II)

worin

$R^1$ und $R^2$ gleich oder verschieden sind und für ein lineares oder verzweigtes $C_1$-$C_6$-Alkyl, und/oder für $C_6$-$C_{10}$-Aryl stehen,
$R^3$ für lineares oder verzweigtes $C_1$-$C_{10}$-Alkylen, $C_6$-$C_{10}$-Arylen oder für $C_1$-$C_6$-Alkylarylen oder Aryl-$C_1$-$C_6$-alkylen steht,
M für Aluminium, Zink oder Titan und/oder eine protonierte Stickstoffbase steht,
m für eine ganze Zahl von 1 bis 4 steht;
n für eine ganze Zahl von 1 bis 3 steht,
x für 1 und 2 steht, und
n, x und m in Formel (II) gleichzeitig nur solche ganzen Zahlen annehmen können, dass das Diphosphinsäuresalz der Formel (II) als Ganzes ungeladen ist und die Faserhalbzeuglagen die Endlosfasern in Form eines Materials aus der Gruppe Gewebe, Gelege, Multiaxialgelege, Gesticke, Geflechte, Vliese, Filze, Matten und unidirektionale Faserstränge oder Gemische dieser Materialien enthalten und das Compound zusätzlich noch Komponente D) Zinkborat enthält.

2. Faser-Matrix-Halbzeuge gemäß Anspruch 1, **dadurch gekennzeichnet, dass** das Compound einen MVR nach ISO 1133 im Bereich von 1 $cm^3$/10 min bis 100 $cm^3$/10 min aufweist und der MVR nach ISO 1133 mittels eines

Kapillarrheometers ermittelt wird.

3. Faser-Matrix-Halbzeug gemäß einem der Ansprüche 1 oder 2, **dadurch gekennzeichnet, dass** das Compound zusätzlich zu den Komponenten A) und B) als Komponente C) wenigstens ein Salz aus Melamin und kondensierten Phosphorsäuren enthält.

4. Faser-Matrix-Halbzeug gemäß Anspruch 3, **dadurch gekennzeichnet, dass** als Komponente C) Melaminpolyphosphat oder Melamin-interkalierte Aluminium-, Zink- oder Magnesium-Salze von kondensierten Phosphaten eingesetzt werden.

5. Faser-Matrix-Halbzeug gemäß Anspruch 4, **dadurch gekennzeichnet, dass** als Komponente C) Bis-Melaminzinko-diphosphat, Bis-Melamin-alumotriphosphat oder Melaminpolyphosphat eingesetzt werden.

6. Faser-Matrix-Halbzeuge gemäß einem der Ansprüche 1 bis 5, **dadurch gekennzeichnet, dass** das Compound zusätzlich zu den Komponenten A) bis D) oder anstelle von C) noch E) Talk enthält.

7. Faser-Matrix-Halbzeuge gemäß einem der Ansprüche 1 bis 6, **dadurch gekennzeichnet, dass** M in den Formeln (I) oder (II) für Aluminium steht.

8. Faser-Matrix-Halbzeuge gemäß einem der Ansprüche 1 bis 7, **dadurch gekennzeichnet, dass** als protonierte Stickstoffbasen die protonierten Basen von 1,3,5-Triazinverbindungen eingesetzt werden.

9. Faser-Matrix-Halbzeuge gemäß einem der Ansprüche 1 bis 8, **dadurch gekennzeichnet, dass** $R^1$ und $R^2$ in den Formeln (I) und (II) gleich oder verschieden sind und für lineares oder verzweigtes $C_1$-$C_6$-Alkyl und/oder für Phenyl stehen.

10. Faser-Matrix-Halbzeuge gemäß einem der Ansprüche 1 bis 9, **dadurch gekennzeichnet, dass** diese mit einer Spritzgusszusammensetzung überspritzt, hinterspritzt oder umspritzt sind, oder angespritzte Funktionselemente aufweisen.

11. Faser-Matrix-Halbzeuge gemäß Anspruch 10, **dadurch gekennzeichnet, dass** das Umspritzen, Hinterspritzen, Überspritzen oder Anspritzen von Funktionselementen nach dem In-Mold-Verfahren IMF erfolgt.

12. Faser-Matrix-Halbzeuge gemäß einem der Ansprüche 1 bis 11, **dadurch gekennzeichnet, dass** die Endlosfasern in den Faserhalbzeuglagen in Form eines Gewebes oder Geleges, vorzugsweise Gewebes, enthalten sind.

13. Imprägnierverfahren zur Herstellung eines einschichtigen Faser-Matrix-Halbzeugs umfassend

a) Bereitstellen von 1 bis 100 Faserhalbzeuglagen aus Endlosfasern, wobei die Faserhalbzeuglagen jeweils ein Flächengewicht im Bereich von 5 $g/m^2$ bis 3000 $g/m^2$ aufweisen,
b) Bereitstellen eines Compounds enthaltend wenigstens ein Polyamid als Komponente A) mit einer nach DIN EN ISO 307 bei 25°C zu bestimmenden relativen Lösungsviskosität in m-Kresol im Bereich von 2,0 bis 4,0 als Matrixpolymer,
c) Auftragen des Compounds auf die Gesamtheit aller Faserhalbzeuglagen,
d) Imprägnieren und Konsolidieren der Gesamtheit aller Faserhalbzeuglagen mit dem Compound zu einem Verbund mit einem nach DIN 1310 definierten Volumenanteil an Fasermaterialien im Bereich von 25 bis 65% und einem Volumenanteil an Luft oder Gas von weniger als 15% durch Einwirken von Temperaturen $\geq$ der Schmelztemperatur des wenigstens einen Polyamids im Compound und zusätzlichem Druck auf die mit Polyamid-Compound beaufschlagte Gesamtheit aller Faserhalbzeuglagen,
e) Abkühlen bzw. Solidifikation unter Erhalt des Faser-Matrix-Halbzeugs,

wobei das Compound bezogen auf 100 Gewichtsteile der Komponente A) zusätzlich als Komponente B) 5 bis 100 Gewichtsteile wenigstens eines organischen Phosphinsäuresalzes der Formel (I) und/oder eines Diphosphinsäuresalzes der Formel (II) und/oder deren Polymere enthält,

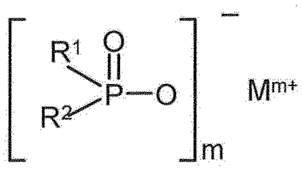 (I) 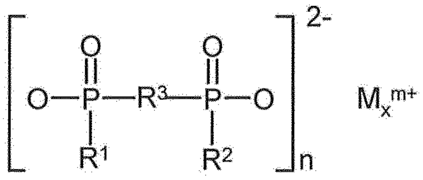 (II)

worin

$R^1$ und $R^2$ gleich oder verschieden sind und für ein lineares oder verzweigtes $C_1$-$C_6$-Alkyl, und/oder für $C_6$-$C_{10}$-Aryl stehen,
$R^3$ für lineares oder verzweigtes $C_1$-$C_{10}$-Alkylen, $C_6$-$C_{10}$-Arylen oder für $C_1$-$C_6$-Alkylarylen oder Aryl-$C_1$-$C_6$-alkylen steht,
M für Aluminium, Zink oder Titan und/oder eine protonierte Stickstoffbase steht,
m für eine ganze Zahl von 1 bis 4 steht;
n für eine ganze Zahl von 1 bis 3 steht,
x für 1 und 2 steht, und
n, x und m in Formel (II) gleichzeitig nur solche ganzen Zahlen annehmen können, dass das Diphosphinsäuresalz der Formel (II) als Ganzes ungeladen ist

und die Faserhalbzeuglagen die Endlosfasern in Form eines Materials aus der Gruppe Gewebe, Gelege, Multiaxialgelege, Gesticke, Geflechte, Vliese, Filze, Matten und unidirektionale Faserstränge oder Gemische dieser Materialien enthalten und das Compound zusätzlich noch Komponente D) Zinkborat enthält.

**14.** Erzeugnisse enthaltend wenigstens ein Faser-Matrix-Halbzeug gemäß einem der Ansprüche 1 bis 12.

**15.** Verwendung der Erzeugnisse gemäß Anspruch 14 im Automotive Bereich als Komponenten für Pkw, Lkw, Verkehrsflugzeuge, in der Luft- und Raumfahrt, in der Bahn, aber auch für Garten- und Haushaltsgeräte, als Computer-Hardware, in handgeführten elektronischen Geräten, in Freizeitartikeln und Sportgeräten, als Strukturbauteile für Maschinen, in Gebäuden, in Photovoltaikanlagen oder in mechanischen Vorrichtungen.

## Claims

**1.** Semifinished fibre-matrix products comprising
from 1 to 100 semifinished-fibre-product plies made of continuous fibres, where the weight per unit area of the respective semifinished-fibre-product plies is in the range from 5 g/m$^2$ to 3000 g/m$^2$,
and the entirety of all of the semifinished-fibre-product plies has been impregnated with, as matrix polymer, a compound material comprising, as component A), at least one polyamide with relative solution viscosity in m-cresol in the range from 2.0 to 4.0, determined in accordance with DIN EN ISO 307 at 25°C,
and the semifinished fibre-matrix product
has a proportion by volume of fibre materials, defined in accordance with DIN 1310, in the range from 25 to 65%, and a proportion by volume of air or gas of less than 15%, and where
the compound material additionally comprises, as component B), based on 100 parts by weight of component A), from 5 to 100 parts by weight of at least one organic phosphinic salt of the Formula (I) and/or of a diphosphinic salt of the Formula (II) and/or polymers thereof

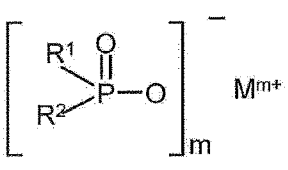 (I) 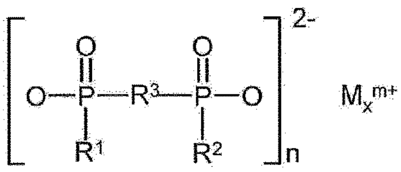 (II)

where

$R^1$ and $R^2$ are identical or different and are linear or branched $C_1$-$C_6$-alkyl and/or are $C_6$-$C_{10}$-aryl,
$R^3$ is linear or branched $C_1$-$C_{10}$-alkylene or $C_6$-$C_{10}$-arylene or is $C_1$-$C_6$-alkylarylene or aryl-$C_1$-$C_6$-alkylene,

M is aluminium, zinc or titanium and/or a protonated nitrogen base,
m is an integer from 1 to 4;
n is an integer from 1 to 3,
x is 1 and 2, and
n, x and m in Formula (II) can assume simultaneously only integers such that the diphosphinic salt of the Formula (II) in its entirety has no charge, and the semifinished-fibre-product plies comprise the continuous fibres in the form of a material from the group of woven fabric, laid scrim, multiaxial laid scrim, knitted fabrics, braided fabrics, nonwoven fabrics, felts, mats and unidirectional fibre strands and mixtures of these materials, and the compound material additionally comprises component D) zinc borate.

2. Semifinished fibre-matrix products according to Claim 1, **characterized in that** the MVR of the compound material is in the range from 1 $cm^3$/10 min to 100 $cm^3$/10 min in accordance with ISO 1133, and the MVR in accordance with ISO 1133 is determined by means of a capillary rheometer.

3. Semifinished fibre-matrix product according to Claim 1 or 2, **characterized in that** the compound material comprises, as component C), in addition to components A) and B), at least one salt derived from melamine and from condensed phosphoric acids.

4. Semifinished fibre-matrix product according to Claim 3, **characterized in that** melamine polyphosphate or melamine-intercalated aluminium, zinc or the magnesium salts of condensed phosphates is/are used as component C).

5. Semifinished fibre-matrix product according to Claim 4, **characterized in that** bismelamine zincodiphosphate, bismelamine aluminotriphosphate or melamine polyphosphate is used as component C).

6. Semifinished fibre-matrix products according to any of Claims 1 to 5, **characterized in that** the compound material also comprises E) talc in addition to components A) to D), or instead of C).

7. Semifinished fibre-matrix products according to any of Claims 1 to 6, **characterized in that** M in the Formula (I) or (II) is aluminium.

8. Semifinished fibre-matrix products according to any of Claims 1 to 7, **characterized in that** the protonated bases of 1,3,5-triazine compounds are used as protonated nitrogen bases.

9. Semifinished fibre-matrix products according to any of Claims 1 to 8, **characterized in that** $R^1$ and $R^2$ in the Formulae (I) and (II) are identical or different and are linear or branched $C_1$-$C_6$-alkyl and/or are phenyl.

10. Semifinished fibre-matrix products according to any of Claims 1 to 9, **characterized in that** an injection-moulding composition has been used for injection onto upper surfaces of these, or injection onto other surfaces of these, or for encapsulating injection onto these, or these have functional elements resulting from add-on injection.

11. Semifinished fibre-matrix products according to Claim 10, **characterized in that** the in-mould process is used to achieve the encapsulating injection, injection onto upper surfaces or injection onto other surfaces, or to achieve the add-on injection of functional elements.

12. Semifinished fibre-matrix products according to any of Claims 1 to 11, **characterized in that** the continuous fibres in the semifinished-fibre-product plies take the form of a woven fabric or laid scrim, preferably woven fabric.

13. Impregnation process for the production of a single-layer semifinished fibre-matrix product comprising

a) provision of from 1 to 100 semifinished-fibre-product plies made of continuous fibres, where the weight per unit area of the respective semifinished-fibre-product plies is in the range from 5 $g/m^2$ to 3000 $g/m^2$,
b) provision of, as matrix polymer, a compound material comprising, as component A), at least one polyamide with relative solution viscosity in m-cresol in the range from 2.0 to 4.0, determined in accordance with DIN EN ISO 307 at 25°C,
c) application of the compound material to the entirety of all of the semifinished-fibre-product plies,
d) impregnation and consolidation of the entirety of all of the semifinished-fibre-product plies with the compound material to give a composite which has a proportion by volume of fibre materials, defined in accordance with DIN 1310, in the range from 25 to 65%, and a proportion by volume of air or gas of less than 15% via exposure

to temperatures ≥ the melting point of the at least one polyamide in the compound material and additional pressure onto the entirety of all of the semifinished-fibre-product plies treated with compound polyamide material,
e) cooling and, respectively, solidification to give the semifinished fibre-matrix product,

where the compound material additionally comprises, as component B), based on 100 parts by weight of component A), from 5 to 100 parts by weight of at least one organic phosphinic salt of the Formula (I) and/or of a diphosphinic salt of the Formula (II) and/or polymers thereof

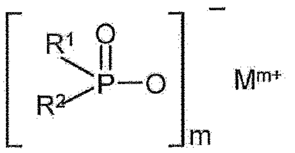 (I) 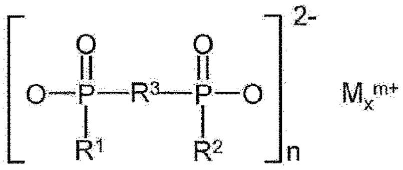 (II)

where

$R^1$ and $R^2$ are identical or different and are linear or branched $C_1$-$C_6$-alkyl and/or are $C_6$-$C_{10}$-aryl,
$R^3$ is linear or branched $C_1$-$C_{10}$-alkylene or $C_6$-$C_{10}$-arylene or is $C_1$-$C_6$-alkylarylene or aryl-$C_1$-$C_6$-alkylene,
M is aluminium, zinc or titanium and/or a protonated nitrogen base,
m is an integer from 1 to 4;
n is an integer from 1 to 3,
x is 1 and 2, and
n, x and m in Formula (II) can assume simultaneously only integers such that the diphosphinic salt of the Formula (II) in its entirety has no charge,

and the semifinished-fibre-product plies comprise the continuous fibres in the form of a material from the group of woven fabric, laid scrim, multiaxial laid scrim, knitted fabrics, braided fabrics, nonwoven fabrics, felts, mats and unidirectional fibre strands and mixtures of these materials, and the compound material additionally comprises component D) zinc borate.

**14.** Products comprising at least one semifinished fibre-matrix product according to any of Claims 1 to 12.

**15.** Use of the products according to Claim 14 in the automotive sector as components for cars, lorries, commercial aircraft, in aerospace, in the railway sector, and also for garden equipment and household equipment, as computer hardware, in hand-held electronic devices, in leisure products and sports equipment, as structural components for machines, in buildings, in photovoltaic systems or in mechanical apparatuses.

## Revendications

**1.** Produits semi-finis fibres-matrice, contenant :

1 à 100 couches de produit semi-fini fibreux à base de fibres continues, les couches de produit semi-fini fibreux présentant chacune un poids superficiel dans la plage allant de 5 g/m$^2$ à 3 000 g/m$^2$,
et la totalité des couches de produit semi-fini fibreux étant imprégnées avec un composé contenant en tant que composant A) au moins un polyamide ayant une viscosité en solution relative dans le m-crésol dans la plage allant de 2,0 à 4,0, déterminée selon DIN EN ISO 307 à 25 °C, en tant que matrice polymère,
et le produit semi-fini fibres-matrice
présentant une proportion en volume de matériaux fibreux, définie selon DIN 1310, dans la plage allant de 25 à 65 %, et une proportion en volume d'air ou de gaz inférieure à 15 %, et
le composé contenant en outre en tant que composant B), pour 100 parties en poids du composant A), 5 à 100 parties en poids d'au moins un sel de l'acide phosphinique organique de formule (I) et/ou un sel de l'acide diphosphinique de formule (II) et/ou leurs polymères,

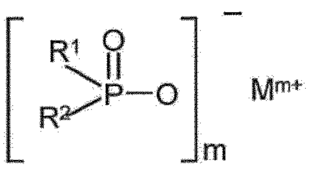 (I) 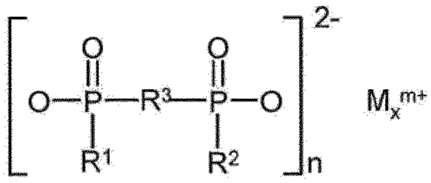 (II)

dans lesquelles

$R^1$ et $R^2$ sont identiques ou différents, et représentent un alkyle en $C_1$-$C_6$ linéaire ou ramifié, et/ou un aryle en $C_6$-$C_{10}$,
$R^3$ représente un alkylène en $C_1$-$C_{10}$ linéaire ou ramifié, un arylène en $C_6$-$C_{10}$ ou un alkylarylène en $C_1$-$C_6$ ou un aryl-alkylène en $C_1$-$C_6$,
M représente l'aluminium, le zinc ou le titane et/ou une base azotée protonée,
m représente un nombre entier de 1 à 4,
n représente un nombre entier de 1 à 3,
x représente 1 et 2, et
n, x et m dans la formule (II) ne peuvent représenter simultanément que des nombres entiers tels que le sel de l'acide diphosphinique de formule (II) dans son ensemble soit non chargé, et les couches de produit semi-fini fibreux contenant les fibres continues sous la forme d'un matériau dans le groupe constitué par les tissus, les nappes, les nappes multiaxiales, les tricots, les treillis, les non-tissés, les feutres, les mats et les faisceaux de fibres unidirectionnels, ou les mélanges de ces matériaux, et le composé contenant en outre également le composant D) du borate de zinc.

**2.** Produits semi-finis fibres-matrice selon la revendication 1, **caractérisés en ce que** le composé présente un MVR selon ISO 1133 dans la plage allant de 1 $cm^3$/10 min à 100 $cm^3$/10 min, et le MVR est déterminé selon ISO 1133 au moyen d'un rhéomètre capillaire.

**3.** Produit semi-fini fibres-matrice selon l'une quelconque des revendications 1 ou 2, **caractérisé en ce que** le composé contient en plus des composants A) et B) en tant que composant C) au moins un sel de mélamine et d'acides phosphoriques condensés.

**4.** Produit semi-fini fibres-matrice selon la revendication 3, **caractérisé en ce que** du polyphosphate de mélamine ou des sels d'aluminium, de zinc ou de magnésium de phosphates condensés intercalés avec de la mélamine sont utilisés en tant que composant C).

**5.** Produit semi-fini fibres-matrice selon la revendication 4, **caractérisé en ce que** du zinco-diphosphate de bis-mélamine, de l'alumotriphosphate de bis-mélamine ou du polyphosphate de mélamine est utilisé en tant que composant C).

**6.** Produits semi-finis fibres-matrice selon l'une quelconque des revendications 1 à 5, **caractérisés en ce que** le composé contient en plus des composants A) à D) ou à la place de C) également E) du talc.

**7.** Produits semi-finis fibres-matrice selon l'une quelconque des revendications 1 à 6, **caractérisés en ce que** M dans les formules (I) ou (II) représente l'aluminium.

**8.** Produits semi-finis fibres-matrice selon l'une quelconque des revendications 1 à 7, **caractérisés en ce que** les bases protonées de composés de 1,3,5-triazine sont utilisées en tant que bases azotées protonées.

**9.** Produits semi-finis fibres-matrice selon l'une quelconque des revendications 1 à 8, **caractérisés en ce que** $R^1$ et $R^2$ dans les formules (I) et (II) sont identiques ou différents, et représentent un alkyle en $C_1$-$C_6$ linéaire ou ramifié, et/ou un phényle.

**10.** Produits semi-finis fibres-matrice selon l'une quelconque des revendications 1 à 9, **caractérisés en ce que** ceux-ci sont surmoulés, sous-moulés ou enrobés par moulage avec une composition de moulage par injection, ou comprennent des éléments fonctionnels injectés.

**11.** Produits semi-finis fibres-matrice selon la revendication 10, **caractérisés en ce que** l'enrobage par moulage, le sous-moulage, le surmoulage ou l'injection d'éléments fonctionnel a lieu par le procédé en moule IMF.

**12.** Produits semi-finis fibres-matrice selon l'une quelconque des revendications 1 à 11, **caractérisés en ce que** les fibres continues sont contenues dans les couches de produit semi-fini fibreux sous la forme d'un tissu ou d'une nappe, de préférence d'un tissu.

**13.** Procédé d'imprégnation pour la fabrication d'un produit semi-fini fibres-matrice monocouche, comprenant :

a) la préparation de 1 à 100 couches de produit semi-fini fibreux en fibres continues, les couches de produit semi-fini fibreux présentant chacune un poids superficiel dans la plage allant de 5 $g/m^2$ à 3 000 $g/m^2$,
b) la préparation d'un composé contenant au moins un polyamide en tant que composant A) ayant une viscosité en solution relative dans le m-crésol dans la plage allant de 2,0 à 4,0, déterminée selon DIN EN ISO 307 à 25 °C, en tant que matrice polymère,
c) l'application du composé sur la totalité des couches de produit semi-fini fibreux,
d) l'imprégnation et la consolidation de la totalité des couches de produit semi-fini fibreux avec le composé pour former un composite présentant une proportion en volume de matériaux fibreux, définie selon DIN 1310, dans la plage allant de 25 à 65 %, et une proportion en volume d'air ou de gaz inférieure à 15 %, sous l'effet de températures ≥ la température de fusion dudit au moins un polyamide dans le composé et d'une pression supplémentaire sur la totalité des couches de produit semi-fini fibreux chargées avec le composé de polyamide,
e) le refroidissement et la consolidation pour obtenir le produit semi-fini fibres-matrice,

le composé contenant en outre en tant que composant B), pour 100 parties en poids du composant A), 5 à 100 parties en poids d'au moins un sel de l'acide phosphinique organique de formule (I) et/ou un sel de l'acide diphosphinique de formule (II) et/ou leurs polymères,

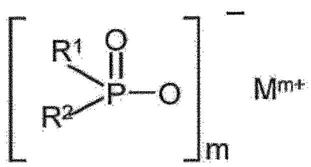 (I) 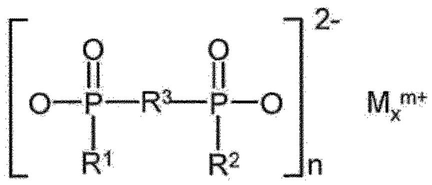 (II)

dans lesquelles

$R^1$ et $R^2$ sont identiques ou différents, et représentent un alkyle en $C_1$-$C_6$ linéaire ou ramifié, et/ou un aryle en $C_6$-$C_{10}$,
$R^3$ représente un alkylène en $C_1$-$C_{10}$ linéaire ou ramifié, un arylène en $C_6$-$C_{10}$ ou un alkylarylène en $C_1$-$C_6$ ou un aryl-alkylène en $C_1$-$C_6$,
M représente l'aluminium, le zinc ou le titane et/ou une base azotée protonée,
m représente un nombre entier de 1 à 4,
n représente un nombre entier de 1 à 3,
x représente 1 et 2, et
n, x et m dans la formule (II) ne peuvent représenter simultanément que des nombres entiers tels que le sel de l'acide diphosphinique de formule (II) dans son ensemble soit non chargé,

et les couches de produit semi-fini fibreux contenant les fibres continues sous la forme d'un matériau dans le groupe constitué par les tissus, les nappes, les nappes multiaxiales, les tricots, les treillis, les non-tissés, les feutres, les mats et les faisceaux de fibres unidirectionnels, ou les mélanges de ces matériaux, et le composé contenant en outre également le composant D) du borate de zinc.

**14.** Articles contenant au moins un produit semi-fini fibres-matrice selon l'une quelconque des revendications 1 à 12.

**15.** Utilisation des articles selon la revendication 14 dans le domaine automobile en tant que composants pour automobiles, camions, avions de ligne, dans l'aéronautique et l'astronautique, dans les chemins de fer, mais également pour des appareils de jardin et ménagers, en tant que matériel informatique, dans des appareils électroniques guidés à la main, dans des articles de loisirs et des appareils de sport, en tant que composants structuraux pour machines,

dans des bâtiments, dans des installations photovoltaïques ou dans des dispositifs mécaniques.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2010132335 A1
- WO 2012132399 A1
- WO 2014135256 A1
- EP 1923420 A1
- WO 2012058379 A1
- WO 2012025362 A1
- EP 2609173 A1
- WO 2014001158 A1
- WO 9739053 A
- EP 2468810 A1
- DE 102011084519 A1
- EP 0485895 B1
- DE 4101106 A1
- US 6036908 B
- US 6475423 B1
- WO 2005070647 A1


### In der Beschreibung aufgeführte Nicht-Patentliteratur


- **BODO CARLOWITZ.** Tabellarische Übersicht über die Prüfung von Kunststoffen. Giesel-Verlag für Publizität, 1992, 16-17
- *CHEMICAL ABSTRACTS,* 218768-84-4
- *Gmelin Syst.-Nr.32, Zn,* 1924, 248
- *Erg.-Bd.,* 1956, 971-972
- Kirk-Othmer. vol. 4, 407-408, 10, , 942
- *Ullmann,* vol. A4 (5), 276
- *Winnacker-Küchler,* vol. 2 (4), 556
- *CHEMICAL ABSTRACTS,* 14807-96-6
- **W. SIEBENPFEIFFER.** Leichtbau-Technologien im Automobilbau. Springer-Wieweg, 2014, 118-120
- *CHEMICAL ABSTRACTS,* 225789-38-8
- **K.L. LÖWENSTEIN.** The Manufacturing Technology of Continuous Glass Fibres. Elsevier Scientific Publishing Corp, 1983
- *CHEMICAL ABSTRACTS,* 25038-54-4
- *CHEMICAL ABSTRACTS,* 32131-17-2
- Handbuch Faserverbund-Kunststoffe. Vieweg-Teubner, 2010, 236
- *CHEMICAL ABSTRACTS,* 12767-90-7
- *CHEMICAL ABSTRACTS,* 1333-86-4
- *CHEMICAL ABSTRACTS,* 110-30-5
- *CHEMICAL ABSTRACTS,* 23128-74-7
- Test for Flammability of Plastic Materials for Parts in Devices and Appliances. Standard of Safety. Underwriters Laboratories Inc, 1998, 14-18